(19) Europäisches Patentamt / European Patent Office / Office européen des brevets

(11) **EP 2 637 323 A1**

(12) **EUROPEAN PATENT APPLICATION**
published in accordance with Art. 153(4) EPC

(43) Date of publication:
**11.09.2013 Bulletin 2013/37**

(51) Int Cl.:
*H04B 10/02* (0000.00)    *H04B 10/04* (0000.00)
*H04B 10/06* (0000.00)    *H04B 10/14* (0000.00)
*H04B 10/18* (0000.00)    *H04B 10/26* (0000.00)
*H04B 10/28* (0000.00)

(21) Application number: **11837706.8**

(22) Date of filing: **06.10.2011**

(86) International application number:
**PCT/JP2011/005638**

(87) International publication number:
**WO 2012/060052 (10.05.2012 Gazette 2012/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.11.2010   JP 2010245176**

(71) Applicant: **NEC Corporation
Tokyo 108-8001 (JP)**

(72) Inventor: **FUKUCHI, Kiyoshi
Tokyo 108-8001 (JP)**

(74) Representative: **Heunemann, Dieter
Vossius & Partner
Siebertstrasse 4
81675 München (DE)**

(54) **COHERENT LIGHT RECEIVING DEVICE, SYSTEM AND METHOD**

(57)    A coherent light receiving device includes a coherent receiving unit which mixes a received optical signal with local light and performs optical coherent detection to output a digital signal, a wavelength dispersion compensation unit which compensates for waveform distortion in the digital signal and outputs a digital signal after compensation, and a frequency difference detection unit which detects the frequency difference between the received optical signal and local light and notifies the wavelength dispersion compensation unit of the frequency difference, wherein the wavelength dispersion compensation unit performs compensation using a transfer function which is based on the frequency difference notified from the frequency difference detection unit and represents waveform distortion due to wavelength dispersion.

FIG. 1

COHERENT LIGHT RECEIVING DEVICE 1

EP 2 637 323 A1

**Description**

TECHNICAL FIELD

The present invention relates to a coherent light receiving device, system, and method, and in particular, a coherent light receiving device, system, and method in which an intradyne coherent detection technique and a digital signal processing technique are combined together.

BACKGROUND ART

An optical fiber communication system is an important technique which realizes long-distance and large-volume communication. In recent years, as a technique for realizing large-volume optical fiber communication, a technique which performs signal equalization and demodulation by a coherent optical communication scheme and digital signal processing has been studied and developed.

In the coherent optical communication scheme, information to be transmitted is applied to one or both of the amplitude and phase of light waves and then transmitted. In order to receive information applied to the amplitude or phase, received light is mixed with local oscillation light (in the following description, abbreviated as "local light") substantially having the same optical frequency as received light, and interference light which is generated by mixing is detected using a photodetector and converted to an electrical signal. This technique is called a coherent detection technique. As a detection scheme, there are a homodyne detection scheme, a heterodyne detection scheme, and an intradyne detection scheme depending on the frequency or phase relationship between the received optical signal and local light.

The homodyne detection uses local light which has a frequency and a phase in synchronization with the received optical signal, the heterodyne detection uses local light which has a frequency away from the received optical signal, and the intradyne detection uses local light which substantially has the same frequency as the received optical signal and has a phase out of synchronization with the received optical signal.

In the studies on coherent optical communication which is well practiced in 1980s, the heterodyne detection is used for the purpose of high sensitivity. These days, however, high-speed and large-volume performance is advanced, and multiple-value demodulation is intended. For this reason, in the case of the heterodyne detection, there is a problem in that the band of an electrical signal output from the photodetector is wide, and there is difficulty in application. In the case of the homodyne detection, since the received band can be a baseband, it is most advantageous from the viewpoint of the output electrical signal band of the photodetector. In the case of the homodyne detection, however, it is necessary to stably perform optical phase synchronization between the received optical signal and local light, causing difficulty in technique realization. In a current coherent detection scheme, the intradyne detection in which phase synchronization of local light is not required and an optical phase-locked loop is not provided becomes the mainstream. Even in the case of the intradyne detection, however, since signal processing after reception becomes complicated, there is difficulty in realization with electrical circuits.

As means for solving the problem in the intradyne detection, digital signal processing technique of a received signal has been developed. This technique is a technique in which an electrical signal output from a photodetector is digitalized by a fast analog-to-digital converter, and the digitalized received signal is processed by a digital signal processing circuit to demodulate a signal. The digital signal processing scheme can be realized by a complementary metal oxide semiconductor (CMOS) circuit capable of high integration, and can perform highly complicated processing compared to an analog electronic circuit. With the digital signal processing technique, the necessary compensation for frequency difference or the necessary phase synchronization can be performed by signal demodulation after the intradyne detection. With the intradyne detection technique and the digital signal processing technique, a high-performance coherent optical communication scheme can be realized without using the optical phase synchronization technique which is required for the homodyne detection or the broadband light receiving circuit technique which is required for the heterodyne detection.

An electrical output subjected to the intradyne detection includes information regarding the optical amplitude and phase of a received optical signal. If the intradyne coherent detection technique and the digital signal processing technique are combined together, it becomes possible to compensate for waveform distortion which becomes problematic in optical transmission. In particular, it is possible to compensate for waveform distortion due to wavelength dispersion in an optical fiber.

The wavelength dispersion is the phenomenon that the propagation speed of light in a medium differs depending on the wavelength, and the amount of wavelength dispersion of a transmission path when an optical signal having a spectrum width of 1 nm produces a pulse spread of 1 ps after propagation is represented as 1 ps/nm. In general, the wavelength dispersion is appropriately compensated by inserting an optical device (optical fiber) having an inverse wavelength dispersion characteristic into a path on a receiving side.

The influence (occurrence of distortion) of wavelength dispersion on the optical signal has a linear effect and is expressed by a linear system, so this influence can be subjected to digital signal processing. Non-Patent Document 1 describes that distortion due to wavelength dispersion is in the form of a linear system.

Specifically, the following expression is established using the value D of wavelength dispersion of the transmission path and an impulse response h (t) which is determined by the value $\lambda$ of a transmission wavelength.

$$y(t) = h(t) \otimes x(t) \qquad (1\text{-}1)$$

Here, x (t) represents an input signal, and y (t) represents an output signal.

If the Fourier transform of x(t) is X(f), the Fourier transform of y(t) is Y(f), and the Fourier transform of h(t) is H (f), the following expression is established.

$$Y(f) = H(f) \times X(f) \qquad (1\text{-}2)$$

At this time, H(f) is called a "transfer function" of a linear system. The transfer function refers to a function which converts an input to the system to an output and is expressed by the ratio of Laplace transform of an output and an input of a control system when all initial values are 0. With the transfer function, an output waveform to an input waveform, that is, waveform distortion is determined uniquely.

While H(f) bears the name of a function as a transfer "function", this does not mean a mathematical function, that is, that a result is output using the value of f as input, and has a role of a "linear function coefficient" in the calculation of the linear system. However, since the value of the coefficient is the "function" of f, H(f) is called a transfer function.

That is, a transfer function which causes distortion can be obtained from information regarding the amount of wavelength dispersion and the wavelength of the optical signal. A detection signal is calculated using a transfer function $H^{-1}(f) = 1/H(f)$ having inverse characteristics to the transfer function H(f) at a receiving end, and a transmission signal with distortion removed can be restored. The transfer function $H^{-1}(f)$ having inverse characteristics to the transfer function H(f) is called an inverse transfer function.

The coherent light receiving device is disclosed in Patent Document 1 to Patent Document 3.

For example, Patent Document 1 discloses a coherent light receiving device which enables clock synchronization by an optical phase modulation signal without using an optical phase-locked loop (PLL), and makes it possible to receive the receptions of both optical modulation schemes of intensity modulation and coherent communication. The coherent light receiving device disclosed in Patent Document 1 includes a 90-degree optical hybrid circuit to which an input optical signal is input, a photodetector to which the output of the 90-degree optical hybrid circuit is input, a clock extraction circuit, a sampling circuit, and a digital signal processing unit. The photodetector includes photodetectors for an in-phase (I) channel and a quadrature (Q) channel. The clock extraction circuit reproduces a synchronized clock having the same rate as a modulated signal obtained by demodulating the input optical signal. The sampling circuit includes sampling circuits for the I channel and the Q channel which perform sampling with the clock reproduced by the clock extraction circuit. The digital signal processing unit performs digital signal processing on the sampling signals to convert the sampling signals to digital signals and outputs the digital signals. The digital signal processing unit returns a thus-detected phase offset signal to the clock extraction circuit to control the phase of the clock, and performs dispersion compensation of the fiber and compensates for phase fluctuations when spatial propagation by a filter function using digital processing.

Patent Document 2 discloses a digital signal processing circuit and a light receiver which can reduce power consumption while realizing high-precision waveform equalization. The light receiver disclosed in Patent Document 2 includes a light receiving unit which receives an input optical signal and converts the input optical signal to an electrical signal, an AD conversion unit which converts the electrical signal from analog to digital to obtain a received signal, and a digital signal processing circuit which performs digital signal processing on the received signal, and reproduces data. In the light receiving unit, it is assumed that an optical signal subjected to multiple-value phase shift keying (PSK) is coherently received as an input optical signal, and the following configuration is made.

The input optical signal which propagates through an optical fiber transmission path connected to an input port of the light receiving unit is given to one input terminal of the optical hybrid circuit through a polarization controller. Local light which is output from a local oscillation light source is given to the other input terminal of the optical hybrid circuit, and the polarization state of the input optical signal to the polarization state of local light is variably controlled by the polarization controller. The optical hybrid circuit combines the input optical signal and local light, and outputs two sets of light having an optical phase difference of 90 degrees to the photodetectors (O/E). Each photodetector receives output light from the optical hybrid circuit and performs photoelectric conversion and detection.

The AD conversion unit which converts the analog electrical signals output from the photodetectors of the light receiving unit to digital signals has two AD converters and a clock generation circuit. Each AD converter samples an analog received signal output from the corresponding photodetector of the light receiving unit in accordance with a clock signal output from the clock generation circuit to convert the analog signal to a digital signal. The digital signals I and Q output from the AD converters are input to a waveform equalization unit of the digital signal processing circuit.

Patent Document 3 discloses a coherent light receiving device which is capable of reducing the number of necessary optical components. The light receiving device disclosed in Patent Document 3 has a laser diode and a receiving unit. The receiving unit includes a 90-degree hybrid, a photoelectric transducer, an analog-to-digital converter, a compensation circuit, a Fourier transformer, and a compensation circuit.

The receiving unit coherently receives local light from the laser diode and an optical signal from a light transmitting device. Specifically, the 90-degree hybrid receives local light and the optical signal from the light transmitting device as input, and outputs in-phase (I) and quadrature (Q) optical signals. The photoelectric transducer converts the in-phase and quadrature optical signals to electrical signals, and the analog-to-digital converter converts the in-phase and quadrature signals from analog signals to digital signals.

The compensation circuit is a finite impulse response (FIR) filter which compensates for wavelength dispersion or the like applied to the digitalized in-phase and quadrature signals in the optical transmission path. The Fourier transformer performs a Fourier transform on the signal after dispersion compensation, and the signal after the Fourier transform is compensated by the compensation circuit and decoded as necessary.

RELATED DOCUMENT

PATENT DOCUMENT

[Patent Document 1] Japanese Unexamined Patent Publication No. 2009-060309
[Patent Document 2] Japanese Unexamined Patent Publication No. 2010-057016
[Patent Document 3] Japanese Unexamined Patent Publication No. 2010-136146

NON-PATENT DOCUMENT

[Non-Patent Document 1] Govind P. Agrawal, "Nonlinear Fiber Optics (second edition)", chapter 3, section 3.2, pp. 63-65, Academic Press, 1995

DISCLOSURE OF THE INVENTION

In the coherent light receiving scheme of the intradyne detection, in order to simplify the device configuration, a local light source performs free-run oscillation, and the frequency and phase of local light is not controlled. As a result, the frequency difference between the received optical signal and local light varies over time.

In the coherent light receiving scheme of the intradyne detection, there is a problem in that, when an optical signal influenced by wavelength dispersion is received, the signal timing of the photodetector output varies due to variation in wavelength dispersion influenced on the optical signal and variation in the frequency difference between the optical signal and local light. This will be described below.

If an optical signal transmitted from a transmitter is x(t) and a transfer function which is determined by wavelength dispersion in a transmission path is H(f), the received optical signal y(t) is expressed by the following expression.

$$y(t) = F^{-1}\{H(f) \times F(x(t))\} = F^{-1}\{H(f) \times X(f)\} \qquad (2\text{-}1)$$

Here, F () is a Fourier transform, F$^{-1}$ () is an inverse Fourier transform, and X (f) is the frequency spectrum of x (t) .

The received optical signal y(t) is mixed with local light having a frequency difference of Δf, and intradyne detection is performed to convert the optical signal to an electrical signal. The converted electrical signal is converted to a digital signal, and thereafter, if the inverse transfer function H$^{-1}$(f) for wavelength dispersion compensation is applied, a signal z(t) after dispersion compensation is expressed by the following expression.

$$z(t) = F^{-1}\left\{H^{-1}(f) \times F\left(y(t) * \exp(j2\pi\Delta ft)\right)\right\} = F^{-1}\left\{H^{-1}(f) \times Y(f - \Delta f)\right\} \quad (2\text{-}2)$$

Here, Y (f) is the frequency spectrum of the signal y (t) .

If Expression (2-1) is substituted into Expression (2-2), the following expression is obtained.

$$z(t) = F^{-1}\left\{H^{-1}(f) \times H(f - \Delta f) \times X(f - \Delta f)\right\} \quad (2\text{-}3)$$

It is known that a transfer function which gives wavelength dispersion is given by the following expression.

$$H(f) = \exp\left(-j\frac{\pi\lambda^2}{c} Df^2\right) \quad (2\text{-}4)$$

Here, c is light speed, A is an optical signal wavelength, and D is wavelength dispersion.

If Expression (2-4) is substituted into Expression (2-3) and arranged, the signal z(t) after dispersion compensation is expressed by the following expression.

$$z(t) = x\left(t - \frac{\lambda^2}{c}D\Delta f\right) \quad (2\text{-}5)$$

At this time, it is assumed that Δf is a value sufficiently smaller than f. As will be understood from Expression (2-5), the signal z(t) which is output after dispersion compensation has a timing shift only by $\lambda^2 * D * \Delta f/c$ with respect to the optical signal x (t) transmitted from the transmitter. The timing shift amount depends on the value of the frequency difference Δf between the optical signal and local light and the wavelength dispersion D. For this reason, if these values change, the timing of the received signal changes.

In the coherent light receiving scheme using the intradyne detection, the received optical signal is mixed with local light to include phase information of light, and down-conversion is performed to drop down the frequency and to convert the optical signal to an electrical signal. Then, digital signal processing is performed to compensate for the frequency difference and the phase difference between the optical signal and local light. As described above, since the local light source performs free-run oscillation, the frequency difference Δf between the optical signal and local light varies over time. For this reason, the down-converted frequency varies.

In this way, since the frequency difference Δf between the optical signal and local light and the wavelength dispersion D are varying values in a light transmission system, the timing of the received signal varies. As a result, for example, an increase in sampling timing errors due to analog-to-digital conversion or bit missing due to timing deviation of the received signal, and the like occur, and become problematic.

An object of the invention provides a coherent light receiving device, system, and method capable of compensating for or considerably reducing timing deviation which becomes problematic when an optical signal influenced by wavelength dispersion is received by intradyne detection.

In order to realize the above-described object, a coherent light receiving device according to an aspect of the invention includes a coherent receiving unit which receives an optical signal including waveform distortion due to wavelength dispersion, mixes the optical signal with local light, performs optical coherent detection and convert the optical signal to an electrical signal, converts the converted electrical signal to a digital signal, and outputs the digital signal, a wavelength dispersion compensation unit which compensates for waveform distortion in the digital signal output from the coherent receiving unit and outputs a digital signal after compensation, and a frequency difference detection unit which receives the digital signal after compensation output from the wavelength dispersion compensation unit, detects the frequency difference between the frequency of the optical signal and the frequency of local light, and notifies the wavelength dispersion compensation unit of the frequency difference, wherein the wavelength dispersion compensation unit performs compensation using a transfer function which is based on the frequency difference notified from the frequency difference detection unit and represents waveform distortion due to wavelength dispersion.

A coherent light receiving system according to another aspect of the invention includes a light transmitting unit which transmits a modulated signal as an optical signal, an optical fiber transmission path through which the optical signal is transmitted, and the above-described coherent light receiving device.

A coherent light receiving method according to still another aspect of the invention includes receiving an optical signal including waveform distortion due to wavelength dispersion, mixing the optical signal with local light, performing optical coherent detection to convert the optical signal to an electrical signal, and converting the converted electrical signal to a digital signal, compensating for waveform distortion in the converted digital signal, and detecting the frequency difference between the frequency of the optical signal and the frequency of local light from the digital signal after compensation, wherein, when compensating for waveform distortion, the compensation is performed using a transfer function which is based on the detected frequency difference and represents waveform distortion due to wavelength dispersion.

According to the invention, it is possible to compensate for or to considerably reduce timing deviation which becomes problematic when an optical signal influenced by wavelength dispersion is received by intradyne detection.

BRIEF DESCRIPTION OF THE DRAWINGS

The above objects and other objects, features, and advantages will become more readily apparent from the following embodiments and the accompanying drawings.

FIG. 1 is a block diagram illustrating the configuration of a coherent light receiving device of a first embodiment.
FIG. 2 is a block diagram illustrating the configuration of a coherent light receiving system of the first embodiment.
FIG. 3 is a flow diagram illustrating the operation of the coherent light receiving device of the first embodiment.
FIG. 4 is a block diagram illustrating the configuration of a coherent light receiving device of a second embodiment.
FIG. 5 is a schematic view illustrating the operation of a signal shift circuit.
FIG. 6 is a flow diagram illustrating the operation of the coherent light receiving device of the second embodiment.
FIG. 7 is a block diagram illustrating the configuration of a coherent light receiving device of a third embodiment.
FIG. 8 is a block diagram illustrating a first configuration of a wavelength dispersion compensation circuit.
FIG. 9 is a block diagram illustrating a second configuration of a wavelength dispersion compensation circuit.
FIG. 10 is a schematic view illustrating the operation of a factor shift circuit.
FIG. 11 is a flow diagram illustrating the operation of a coherent light receiving device of a third embodiment.
FIG. 12 is a block diagram illustrating a coherent light receiving system using a coherent light receiving device of a fourth embodiment.
FIG. 13 is a block diagram illustrating the configuration of a coherent light receiving device of a fifth embodiment.

DESCRIPTION OF EMBODIMENTS

A mode for carrying out the invention will be described with reference to the drawings.

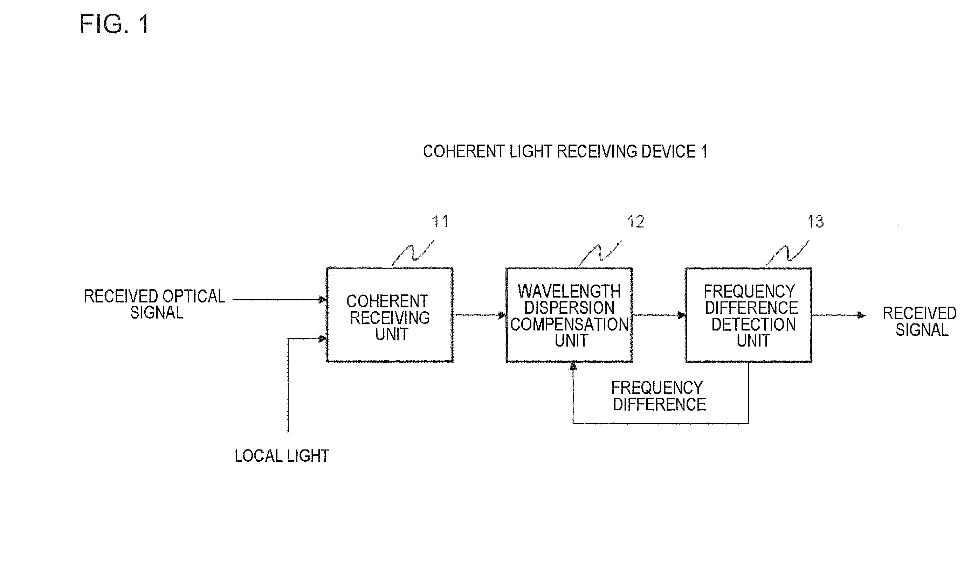

FIG. 1 is a block diagram illustrating the configuration of a coherent light receiving device according to a first embodiment of the invention.

It should be noted that embodiments are for illustration, and the device and system of the disclosure are not limited to the configuration of the following embodiments.

The coherent light receiving device 1 includes a coherent receiving unit 11, a wavelength dispersion compensation unit 12, and a frequency difference detection unit 13.

The coherent light receiving device 1 receives an optical signal including waveform distortion due to wavelength dispersion, mixes the optical signal with local light, performs optical coherent detection to convert the optical signal to an electrical signal, converts the converted electrical signal to a digital signal, and outputs the digital signal.

The wavelength dispersion compensation unit 12 compensates for waveform distortion in the digital signal output from the coherent receiving unit 11, and outputs a digital signal after compensation.

The frequency difference detection unit 13 receives the digital signal after compensation output from the wavelength dispersion compensation unit 12, detects the frequency difference between the frequency of the optical signal and the frequency of local light, and notifies the wavelength dispersion compensation unit 12 of the frequency difference.

The wavelength dispersion compensation unit 12 performs compensation using a transfer function which is based on the frequency difference notified from the frequency difference detection unit 13 and represents waveform distortion due to wavelength dispersion.

With the above, a received signal received by the coherent light receiving device 1 is output.

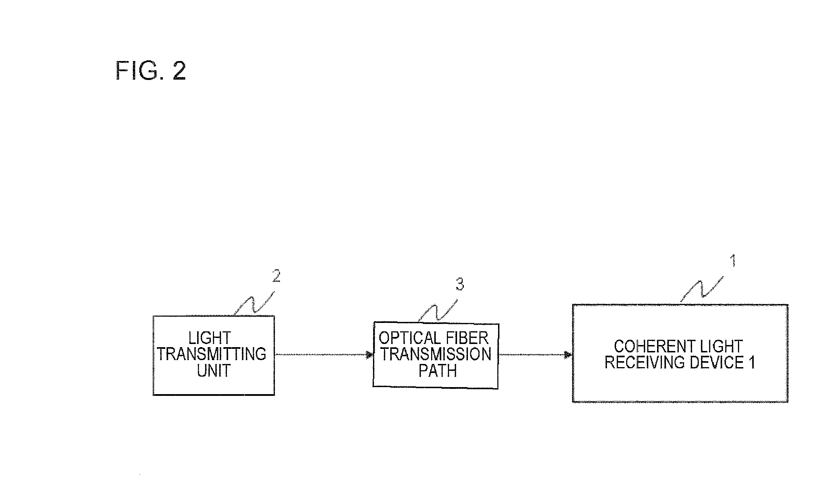

FIG. 2 is a block diagram illustrating the configuration of a coherent light receiving system of the first embodiment. The coherent light receiving system includes a light transmitting unit 2 which transmits a modulated signal as an optical signal, an optical fiber transmission path 3 through which the optical signal is transmitted, and the above-described coherent light receiving device 1.

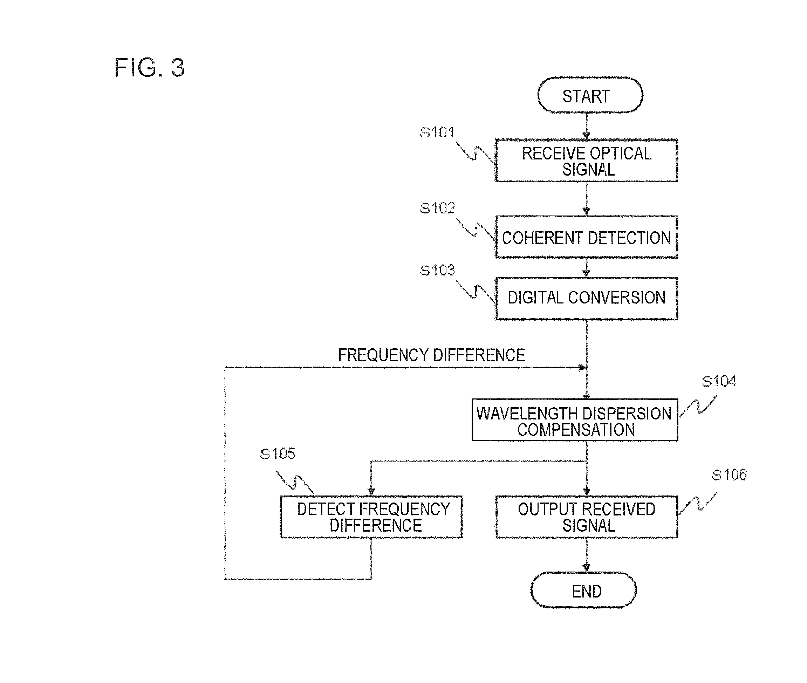

FIG. 3 is a flow diagram illustrating the operation of the coherent light receiving device of the first embodiment.

First, an optical signal including waveform distortion due to wavelength dispersion is received (S101) . The received optical signal is mixed with local light, and optical coherent detection is performed to convert the optical signal to an electrical signal (S102) . The converted electrical signal is converted to a digital signal (S103) .

The compensation for waveform distortion in the converted digital signal is performed (S104).

The frequency difference between the frequency of the optical signal and the frequency of local light is detected from the digital signal after compensation (S105).

When compensating for waveform distortion due to wavelength dispersion in S104, the compensation is performed using a transfer function which is based on the frequency difference detected in S105 and represents waveform distortion due to wavelength dispersion.

Then, a received signal is output (S106) .

As described above, in the first embodiment, the frequency difference between the frequency of the received optical signal and the frequency of local light is detected, and compensation is performed using the transfer function which is based on the detected frequency difference and represents waveform distortion due to wavelength dispersion.

As described above as the problems, the frequency difference between the received optical signal and local light varies over time. Accordingly, the frequency difference between the frequency of the received optical signal and the frequency of local light is detected and output on the basis of the digital signal after compensation for wavelength dispersion. Even if the frequency difference between the received optical signal and local light varies, compensation is performed using the transfer function which is based on the detected frequency difference and represents waveform distortion due to wavelength dispersion, whereby timing deviation of the received signal can be compensated for or considerably reduced.

Next, a coherent light receiving device according to a second embodiment of the invention will be described.

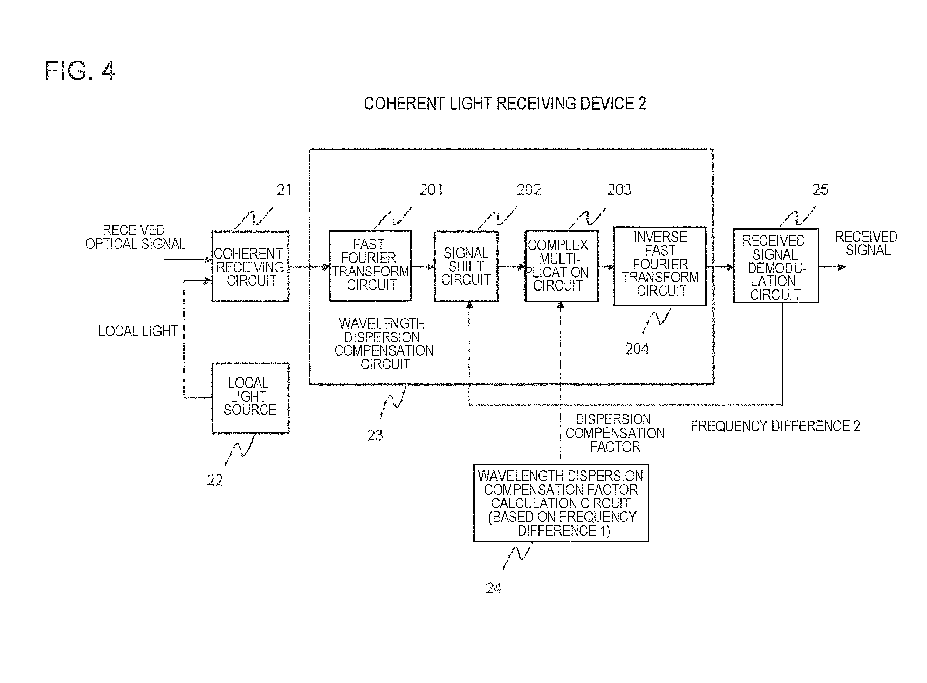

FIG. 4 is a block diagram illustrating the configuration of a coherent light receiving device according to a second embodiment of the invention. A coherent light receiving device 2 of the second embodiment includes a coherent receiving circuit 21, a local light source 22, a wavelength dispersion compensation circuit 23, a wavelength dispersion compensation factor calculation circuit 24, and a received signal demodulation unit 25.

In FIG. 4, the coherent receiving circuit 21 receives a phase-modulated optical signal from a light transmitting unit (not shown) (for example, the light transmitting unit 2 of FIG. 2) through an optical fiber transmission path (not shown) (for example, the optical fiber transmission path 3 of FIG. 2). The modulation scheme of the optical signal is not limited to phase modulation, and any modulation scheme may be used insofar as coherent light reception is possible. For example, amplitude modulation or frequency modulation may be used. Furthermore, amplitude modulation or frequency modulation and phase modulation may be used in combination.

The optical fiber transmission path is a normal single-mode fiber, and wavelength dispersion D per unit length is, for example, about 17 ps/nm/km at a wavelength of 1.55 microns. That is, the coherent receiving circuit 21 receives an optical signal which undergoes waveform distortion due to wavelength dispersion D.

In the coherent receiving circuit 21, the received optical signal and local light output from the local light source 22 are input to an optical hybrid circuit (not shown), and quadrature receiving of the received optical signal is performed. The in-phase (I component) and the quadrature (Q component) of the received optical signal are separated, and interference light which is generated by mixing with local light is detected as the electrical signals of the I component and the Q component by the photodetectors (not shown). The electrical signals are subjected to analog-to-digital conversion by an analog-to-digital converter (not shown) and output from the coherent receiving circuit 21 as digital signals. At this time, it is assumed that digital sampling by the analog-to-digital converter is performed at a time step $\Delta t$.

In this way, in the coherent receiving circuit 21, quadrature receiving of the received optical signal is performed, and the I component and the Q component of the received optical signal are separated and output. The digital signals which are separated into the I component and the Q component and output from the coherent receiving circuit 21 are individually processed, and amplitude and phase information of the electric field of the received optical signal is obtained. However, in the following description, description will be provided simply using digital signals without reference to the I component and the Q component unless different types of processing are performed with the I component and the Q component.

In this embodiment, the local light source 22 uses a distributed feedback (DFB) semiconductor laser having a narrow line width. The local light source 22 may be a device having a narrow line width capable of coherent optical communication, and may be, for example, a distributed Bragg reflector (DBR) laser, an external mirror laser, or the like having a narrow line width.

The digital signals output from the coherent receiving circuit 21 are input to the wavelength dispersion compensation circuit 23 and subjected to wavelength dispersion compensation processing described below, whereby waveform distortion is removed. The wavelength dispersion compensation processing is performed on the basis of the dispersion compensation factor output from the wavelength dispersion compensation factor calculation circuit 24.

The wavelength dispersion compensation factor calculation circuit 24 calculates the dispersion compensation factor for compensating for waveform distortion due to wavelength dispersion at the frequency of the received optical signal under the condition that the frequency difference between the frequency of the received optical signal and the frequency of local light is a first frequency difference (frequency difference 1) which becomes a specific value. That is, the dispersion compensation factor includes a digitized factor which is an inverse transfer function of a transfer function representing waveform distortion due to wavelength dispersion at the frequency of the received optical signal.

The dispersion compensation and the dispersion compensation factor will now be described.

As described in the background art, the occurrence of distortion of the optical signal due to wavelength dispersion has a linear effect, is expressed by a linear system, and can perform digital signal processing. The transfer function H (f) which causes distortion can be obtained from information regarding the amount of wavelength dispersion and the wavelength of the optical signal. For this reason, a detection signal is calculated using the inverse transfer function $H^{-1}$ (f) = 1/H(f) of the transfer function H(f) at a receiving end, whereby a transmission signal with distortion removed can be restored.

Wavelength dispersion compensation with intended digital signal processing in this embodiment restores the waveform by the following procedure.

The electrical signals output from the coherent receiving circuit 21 become discrete signals which are sampled and digitalized by the analog-to-digital converter (not shown) of the coherent receiving circuit 21. The wavelength dispersion compensation circuit 23 performs Fourier transform processing using the discrete signals as input to convert the discrete signals to discrete frequency domain signals (frequency spectrum).

Since the transfer function H(f) which causes distortion can be obtained from information regarding the amount of wavelength dispersion and the wavelength of the optical signal, the inverse transfer function $H^{-1}$(f) = 1/H(f) is calculated as the dispersion compensation factor so as to compensate for distortion.

The dispersion compensation factor becomes a discrete value, and is multiplied by the frequency spectrum after the Fourier transform processing at each frequency, thereby obtaining a frequency spectrum with distortion corrected.

The frequency spectrum with distortion corrected is subjected to an inverse Fourier transform and returned to a digital signal in a time domain.

That is, the optical signal received from the optical fiber transmission path undergoes waveform distortion due to wavelength dispersion in the optical fiber transmission path. In order to remove waveform distortion, the transfer function H(f) which causes distortion is calculated using the value D of wavelength dispersion of the optical fiber transmission path and the wavelength λ of the received optical signal, and the dispersion compensation factor which cancels the transfer function H(f) is calculated. The dispersion compensation factor is the transfer function $H^{-1}$(f), and the transfer function $H^{-1}$(f) has inverse characteristics, $H^{-1}$(f) = 1/H(f), which cancel the characteristics of the transfer function H(f), and is thus called the inverse transfer function of the transfer function H(f). As a configuration in which the dispersion compensation factor is calculated and output, the wavelength dispersion compensation factor calculation circuit 24 is provided.

The wavelength dispersion compensation factor calculation circuit 24 calculates the dispersion compensation factor for compensating for waveform distortion due to wavelength dispersion at the frequency of the received optical signal under the condition that the frequency difference between the frequency of the received optical signal and the frequency of local light is the first frequency difference (frequency difference 1) which becomes a specific value. That is, the dispersion compensation factor is the dispersion compensation factor which is calculated under the condition that the frequency difference between the received optical signal and local light becomes the frequency difference 1. The dispersion compensation factor becomes a discrete value, and may be regarded as a filter factor which represents frequency characteristics when the wavelength dispersion compensation circuit 23 is a finite impulse response (FIR) filter. In this embodiment, for simplification, it is assumed that the frequency difference 1 which becomes a specific value is zero (0).

Accordingly, the wavelength dispersion compensation factor calculation circuit 24 calculates and outputs the dispersion compensation factor which is given by the wavelength dispersion D of the optical fiber transmission path

under the condition that the frequency difference 1 between the frequency of the received optical signal and the frequency of local light is zero (0) . This is obtained by the following expression as the inverse transfer function of the transfer function expressed by Expression (2- 4) .

$$H^{-1}(f) = \frac{1}{H(f)} = \frac{1}{\exp\left(-j\frac{\pi\lambda^2}{c}Df\right)} = \exp\left(j\frac{\pi\lambda^2}{c}Df\right) = \exp\left(-j\frac{\pi\lambda^2}{c}(-D)f\right)$$

In other words, the dispersion compensation factor in this embodiment is the dispersion compensation factor which can be used under the condition that the frequency of the received optical signal is identical to the frequency of local light.

The digital signals which are subjected to the wavelength dispersion compensation processing and output from the wavelength dispersion compensation circuit 23 are input to the received signal demodulation circuit 25. The received signal demodulation circuit 25 performs signal demodulation processing and outputs a received signal. The received signal demodulation circuit 25 detects the frequency difference between the received optical signal and local light during the signal demodulation processing, and outputs a second frequency difference (frequency difference 2). That is, the received signal demodulation circuit 25 detects the frequency difference between the received optical signal and local light while coherent optical communication is performed. Accordingly, frequency variation of local light which is emitted from the local light source 22 performing free-run oscillation is detected as the frequency difference 2.

The wavelength dispersion compensation circuit 23 compensates for waveform distortion due to wavelength dispersion using the dispersion compensation factor output from the wavelength dispersion compensation factor calculation circuit 24. At this time, in this embodiment, after frequency variation of the down-converted digital signal obtained by mixing the received optical signal and local light is corrected, waveform distortion due to wavelength dispersion is compensated for. That is, for the digital signal in which the frequency difference 2 as the influence frequency variation of local light is removed, waveform distortion due to wavelength dispersion is compensated for using the dispersion compensation factor which is calculated under the condition that the frequency difference between the optical signal and local light is zero (0).

Hereinafter, the configuration and operation of the wavelength dispersion compensation circuit 23 will be described.

As illustrated in FIG. 4, the wavelength dispersion compensation circuit 23 includes a fast Fourier transform circuit 201, a signal shift circuit 202, a complex multiplication circuit 203, and an inverse fast Fourier transform circuit 204.

The digital signal input to the wavelength dispersion compensation circuit 23 is converted to a frequency spectrum by the fast Fourier transform circuit 201. The frequency spectrum output from the fast Fourier transform circuit 201 is input to a signal shift circuit 302 and subjected to shift processing on a frequency axis on the basis of the frequency difference 2 as described below. The frequency spectrum which is output from the signal shift circuit 202 and subjected to the shift processing on the frequency axis on the basis of the frequency difference 2 is input to the complex multiplication circuit 203 and multiplied to the dispersion compensation factor output from the wavelength dispersion compensation factor calculation circuit 24, whereby wavelength dispersion is compensated for. The output of the complex multiplication circuit 203 subjected to wavelength dispersion compensation is converted to a digital signal by the inverse Fourier transform 204 and output as the output of the wavelength dispersion compensation circuit 23.

In this way, the wavelength dispersion compensation circuit 23 of the coherent light receiving device 2 of the second embodiment shifts the digital signal converted to the frequency spectrum on the frequency axis using the signal shift circuit 202.

In this embodiment, it is assumed that the received optical signal which is input to the coherent receiving circuit 21 is y(t) which is expressed by Expression (2-1). Then, the output of the fast Fourier transform circuit 201 is given by W(f) described below.

$$W(f) = F\big(y(t) * \exp(j2\pi\Delta ft)\big) = Y(f - \Delta f) \qquad \text{(3-1)}$$

 Here, Y (f) represents the frequency spectrum of y (t) . The digital signal converted to the frequency spectrum is shifted in the frequency axis direction by the frequency difference 2 ($\Delta f$) using the signal shift circuit 202, whereby the output signal W' (f) is given by the following expression.

$$W'(f) = W(f + \Delta f) = Y(f) \qquad (3\text{-}2)$$

Accordingly, if the wavelength dispersion compensation factor H$^{-1}$ (f) is multiplied to the output from the signal shift circuit 202 using the complex multiplier 203 and processed using the inverse fast Fourier transform circuit 204, an output z (t) is given by the following expression.

$$\begin{aligned} z(t) &= F^{-1}\{H^{-1}(f) \times W'(f)\} \\ &= F^{-1}\{H^{-1}(f) \times Y(f)\} \\ &= F^{-1}\{H^{-1}(f) \times H(f) \times X(f)\} = x(t) \end{aligned} \qquad (3\text{-}3)$$

Therefore, at the output of the inverse fast Fourier transform circuit 204, the transmission signal x (t) with no timing variation due to frequency variation of local light is restored.

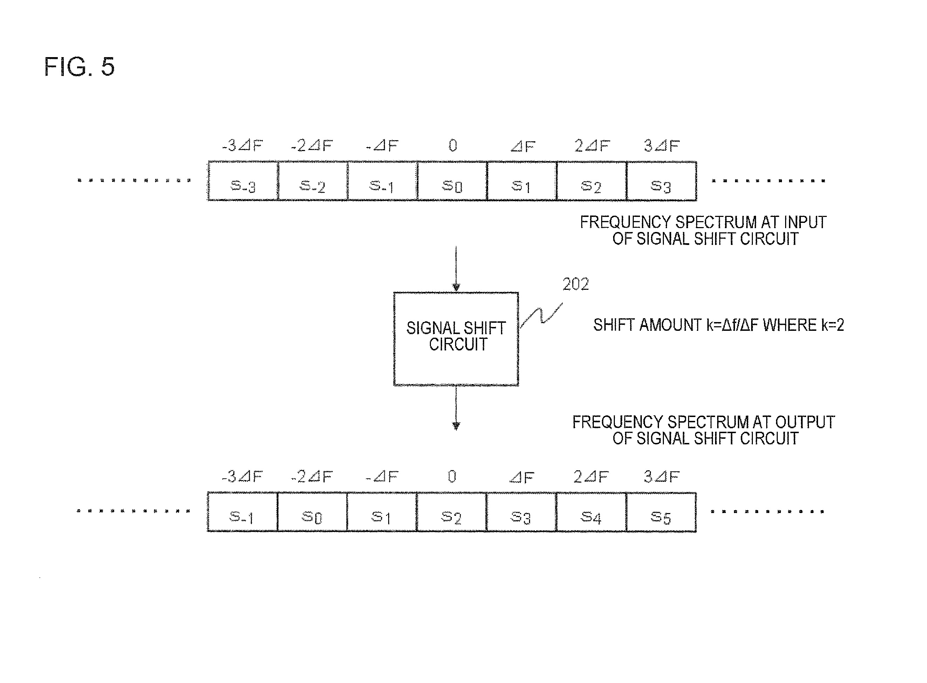

FIG. 5 is a schematic view illustrating the operation of the signal shift circuit 202.

FIG. 5 illustrates a state where the digital signal converted to the frequency spectrum using the fast Fourier transform circuit 201 is input to the signal shift circuit 202 and output as the frequency spectrum which is subjected to the shift processing taking into consideration the value of frequency variation of local light.

As described above, in this embodiment, the received optical signal is converted to the electrical signal, the electrical signal is regarded as discrete signals digitalized by sampling, and a Fourier transform and arithmetic operation with a digitized transfer function is performed by digital signal processing. At this time, the digitalized discrete signal is accumulated in a memory in a predetermined amount, and arithmetic operation is performed on the predetermined amount of data. FIG. 5 illustrates a data set in the form of an image of arrangement, and Sn in the drawing represents the arrangement of the digitalized discrete signals (frequency spectrum).

The frequency spectrum which is subjected to the fast Fourier transform and input to the signal shift circuit 202 becomes information regarding a frequency step $\Delta F$. For the frequency spectrum, the arrangement of the frequency spectrum is shifted by k = $\Delta f/\Delta F$ (closest integer) using information regarding the frequency difference $\Delta f$ (frequency difference 2) between the received optical signal and local light to generate a frequency spectrum as output. FIG. 5 illustrates a case where k = $\Delta f/\Delta F$ = 2.

In this way, processing for moving the arrangement of a predetermined amount of discrete signals accumulated in each memory at the frequency step $\Delta F$ by steps corresponding to a value to be corrected is called "shift processing on the frequency axis".

In this embodiment, it is configured that the dispersion compensation factor is calculated under the condition that the frequency difference 1 between the frequency of the received optical signal and the frequency of local light is zero (0). For this reason, the signal shift circuit 202 can set the frequency difference 2 output from the received signal demodulation circuit 25 to $\Delta f$. If the frequency difference 1 when the dispersion compensation factor is calculated is a specific value (for example, f1) other than zero (0), when the frequency difference 2 output from the received signal demodulation circuit 25 is, for example, f2, k becomes k = (f1-f2) / $\Delta F$ (closest integer).

In the above-described manner, the wavelength dispersion compensation circuit 23 performs correction to a digital signal taking into consideration the value of frequency variation of local light using the signal shift circuit 202. Thereafter, wavelength dispersion compensation is performed using the dispersion compensation factor, and the digital signal in which waveform distortion due to wavelength dispersion is compensated for is output. The dispersion compensation factor which is used at this time is the value which is calculated under the condition that there is no frequency variation of local light.

The digital signal output from the wavelength dispersion compensation circuit 23 is input to the received signal demodulation circuit 25. The received signal demodulation circuit 25 compensates for the frequency difference and the phase difference between the received optical signal and local light, demodulates a modulated multiple-value signal, and outputs a received signal. For the demodulation, for example, an M-th power algorithm or the like is used. The received signal demodulation circuit 25 detects the frequency difference between the frequency of the received optical signal and the frequency of local light during the demodulation processing and outputs the frequency difference as information regarding the frequency difference 2.

In the above-described embodiment, the wavelength dispersion compensation circuit 23 and the received signal demodulation circuit 25 may be logic circuits which can realize the functions. For example, integrated large scale integration (LSI) by CMOS, a field programmable gate array (FPGA), or a logic discrete circuit may be used.

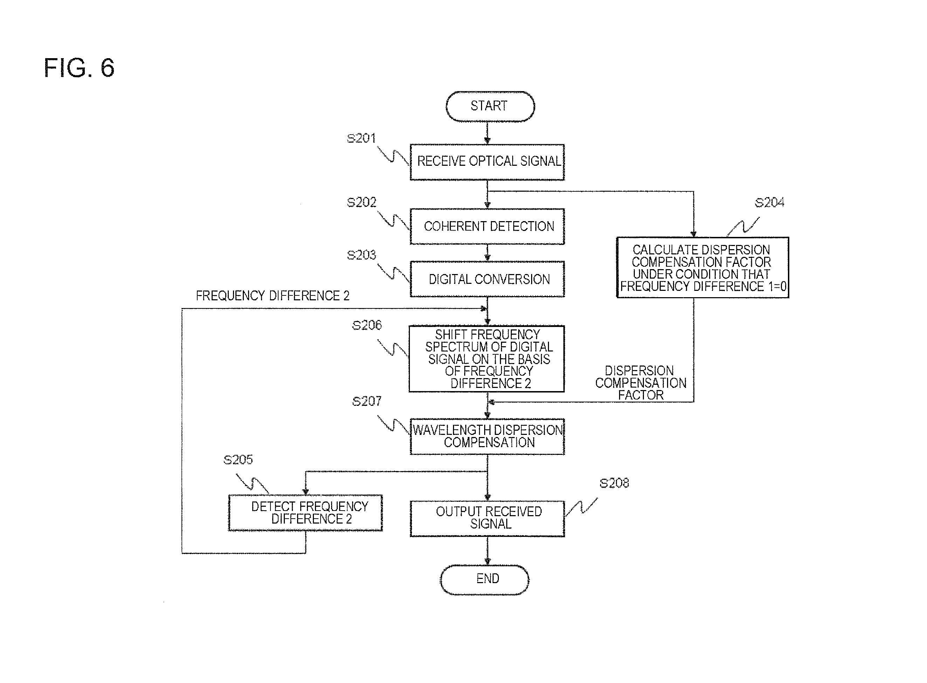

FIG. 6 is a flow diagram illustrating the operation of the coherent light receiving device 2 of the second embodiment.

First, an optical signal influenced by waveform distortion due to wavelength dispersion is received (S201) . The received optical signal is mixed with local light, and optical coherent detection is performed to convert the optical signal to an electrical signal (S202) . The converted electrical signal is converted to a digital signal (S203) .

The dispersion compensation factor compensating for waveform distortion due to wavelength dispersion at the frequency of the received optical signal is calculated and output under the condition that the frequency difference between the frequency of the received optical signal and the frequency of local light is the frequency difference 1 = 0 (S204).

In S206, until the frequency difference 2 is detected and output, or when the frequency difference 2 = 0, the frequency spectrum of the digital signal is not subjected to shift processing.

The compensation processing based on the dispersion compensation factor is performed on the digital signal, and the compensated digital signal is output (S207). Until the frequency difference 2 is detected and output, or when the frequency difference 2 = 0, the compensation processing is performed on the digital signal which is not subjected to the shift processing.

The demodulation processing is performed on the basis of the digital signal which is subjected to the wavelength dispersion compensation processing, and the frequency difference between the frequency of the received optical signal and the frequency of local light during the demodulation processing is detected and output as the frequency difference 2 (S205).

If the frequency difference 2 is detected and output, in S206, the frequency spectrum of the digital signal is shifted in the frequency axis direction on the basis of the frequency difference 2. At this time, in S207, the wavelength dispersion compensation processing based on the dispersion compensation factor is performed on the digital signal whose frequency spectrum is shifted in the frequency axis direction on the basis of the frequency difference 2.

The received signal with timing variation suppressed is output (S208).

As described above, in the second embodiment, the dispersion compensation factor for compensating for waveform distortion due to wavelength dispersion at the frequency of the received optical signal under the condition that the frequency difference between the received optical signal and the frequency of local light is the frequency difference 1 = 0 which becomes a specific value. The dispersion compensation factor includes the digitized factor which is the inverse transfer function of the transfer function representing waveform distortion due to wavelength dispersion at the frequency of the received optical signal. That is, waveform distortion due to wavelength dispersion is compensated for using the transfer function (inverse transfer function) which has the inverse characteristics to the transfer function causing waveform distortion.

However, as described above as the problem, the frequency difference between the received optical signal and local light varies over time. Accordingly, the received signal demodulation circuit 25 is configured such that the frequency difference between the frequency of the received optical signal and the frequency of local light is detected and output as the frequency difference 2 on the basis of the digital signal after wavelength dispersion compensation during the demodulation of the digital signal to the received signal. When the frequency difference $2 \neq 0$ as the frequency difference between the frequency of the received optical signal and the frequency of local light detected during the demodulation of the digital signal, this means that the frequency difference between the optical signal and local light varies.

Even if the frequency difference between the received optical signal and local light varies, the signal shift circuit 202 shifts the frequency spectrum of the digital signal, in which waveform distortion due to wavelength dispersion is to be compensated for, on the frequency axis on the basis of the frequency difference 2. The compensation for waveform distortion due to wavelength dispersion based on dispersion compensation factor is performed on the frequency spectrum shifted on the frequency axis. For this reason, even if the frequency difference between the received optical signal and local light varies over time, it is possible to compensate for or to considerably reduce timing deviation of the received signal.

Of course, it will be apparent that, even if there is no condition that the frequency difference 1 = 0, it will be apparent that the coherent light receiving device 2 of this embodiment can shift the frequency spectrum of the digital signal on the basis of the differential frequency between the value of the frequency difference 1 and the value of the frequency difference 2.

In this way, when a signal influenced by wavelength dispersion is received by intradyne detection, even if frequency variation in local light occurs, the coherent light receiving device 2 of this embodiment can output the received signal with timing variation suppressed.

Of course, the coherent light receiving device 2 of the second embodiment can be applied to the coherent light receiving system illustrated in FIG. 2.

Next, a coherent light receiving device of a third embodiment will be described.

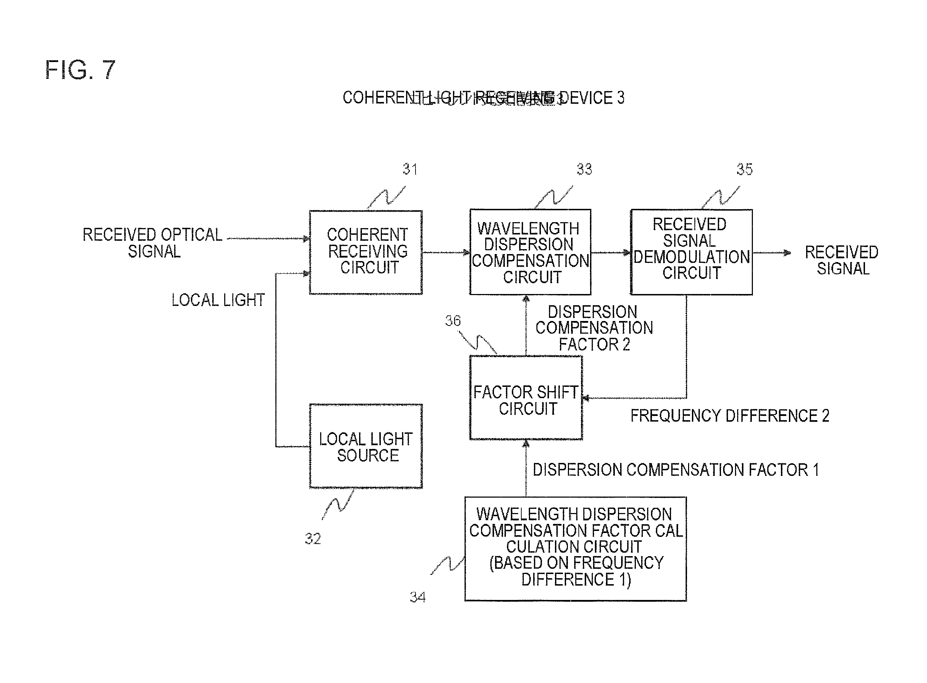

FIG. 7 is a block diagram illustrating the configuration of a coherent light receiving device according to a third embodiment of the invention. A coherent light receiving device 3 of the third embodiment includes a coherent receiving circuit 31, a local light source 32, a wavelength dispersion compensation circuit 33, a wavelength dispersion compensation factor calculation circuit 34, a received signal demodulation circuit 35, and a factor shift circuit 36.

In FIG. 7, the coherent receiving circuit 31 receives a phase-modulated optical signal from a light transmitting unit (not shown) (for example, the light transmitting unit 2 of FIG. 2) through an optical fiber transmission path (not shown) (for example, the optical fiber transmission path 3 of FIG. 2). The modulation scheme of the optical signal is not limited to phase modulation, and any modulation scheme may be used insofar as coherent light reception is possible. For example, amplitude modulation or frequency modulation may be used. Furthermore, amplitude modulation or frequency modulation and phase modulation may be used in combination.

The optical fiber transmission path is a normal single-mode fiber, and wavelength dispersion D per unit length is, for example, about 17 ps/nm/km at a wavelength of 1.55 microns. That is, the coherent receiving circuit 31 receives an optical signal which undergoes waveform distortion due to wavelength dispersion D.

In the coherent receiving circuit 31, the received optical signal is mixed with local light output from the local light source 32 by an optical hybrid circuit (not shown), and interference light which is generated by mixing is detected by a photodetector (not shown) as an electrical signal and quadrature-received. The electrical signal is subjected to analog-to-digital conversion by an analog-to-digital converter (not shown) and output from the coherent receiving circuit 31 as a digital signal.

The local light source 32 uses a distributed feedback (DFB) semiconductor laser having a narrow line width. The local light source 32 may be a device having a narrow line width capable of coherent optical communication, and may be, for example, a distributed Bragg reflector (DBR) laser, an external mirror laser, or the like having a narrow line width.

The digital signal output from the coherent receiving circuit 31 is input to the wavelength dispersion compensation circuit 33 and subjected to wavelength dispersion compensation processing, whereby waveform distortion is removed. The wavelength dispersion compensation processing is performed on the basis of a dispersion compensation factor 2 output from the factor shift circuit 36 described below.

The principle of wavelength dispersion compensation on a discrete signal in the wavelength dispersion compensation circuit 33 is the same as the wavelength dispersion compensation circuit 23 of the second embodiment, thus description thereof will not be repeated.

The wavelength dispersion compensation factor calculation circuit 34 calculates a dispersion compensation factor for compensating for wavelength dispersion at the frequency of the received optical signal under the condition that the frequency difference between the received optical signal and the frequency of local light is a frequency difference 1 which becomes a specific value. The dispersion compensation factor which is calculated by and output from the wavelength dispersion compensation factor calculation circuit 34 is referred to as a "dispersion compensation factor 1".

That is, the dispersion compensation factor 1 is the dispersion compensation factor which is calculated under the condition that the frequency difference between the received optical signal and local light is the frequency difference 1. In this embodiment, as in the second embodiment, for simplification, it is assumed that the frequency difference 1 which becomes a specific value is zero (0).

As described in the second embodiment, the dispersion compensation factor is a transfer function (inverse transfer function) having inverse characteristics, $H^{-1}(f) = 1/H(f)$, which cancel a transfer function $H(f)$ causing waveform distortion due to wavelength dispersion in the optical fiber transmission path. The dispersion compensation factor is the factor of a frequency domain having a discrete value.

Accordingly, the wavelength dispersion compensation factor calculation circuit 34 calculates and outputs the dispersion compensation factor 1 which is given by the wavelength dispersion D of the optical fiber transmission path under the condition that the frequency difference 1 between the frequency of the received optical signal and the frequency of local light is zero (0). In other words, the dispersion compensation factor 1 in this embodiment is the dispersion compensation factor which can be used under the condition that the frequency of the received optical signal is identical to the frequency of local light.

The digital signal which is output from the wavelength dispersion compensation circuit 33 and subjected to wavelength dispersion compensation is input to the received signal demodulation circuit 35. The received signal demodulation circuit 35 performs signal demodulation processing and outputs a received signal. The received signal demodulation circuit 35 detects the frequency difference between the received optical signal and local light during the signal demodulation processing, and outputs a frequency difference 2. That is, the received signal demodulation circuit 35 detects the frequency difference between the received optical signal and local light while coherent optical communication is performed. Accordingly, frequency variation of local light which is emitted from the local light source 32 performing free-run oscillation is detected as the frequency difference 2.

The factor shift circuit 36 receives the dispersion compensation factor 1 output from the wavelength dispersion compensation factor calculation circuit 34 and the frequency difference 2 output from the received signal demodulation circuit 36 as input.

The factor shift circuit 36 calculates a new second dispersion compensation factor (dispersion compensation factor 2) on the basis of the dispersion compensation factor 1 input from the wavelength dispersion compensation factor calculation circuit 34 and the frequency difference 2 input from the received signal demodulation circuit 35, and outputs the second dispersion compensation factor to the wavelength dispersion compensation circuit 33. That is, when the frequency difference 2 is different from the frequency difference 1, since frequency variation of local light occurs, as described below, the dispersion compensation factor 2 which has a value obtained by shifting the dispersion compensation factor 1 on the frequency axis by frequency variation is generated.

In this embodiment, since it is assumed that the frequency difference 1 is zero (0), when the frequency difference 2 has a value other than zero (0), the factor shift circuit 36 shifts the value of the dispersion compensation factor 1 on the frequency axis by the amount of frequency variation corresponding to this value to generate the dispersion compensation factor 2. However, even when the dispersion compensation factor 1 is calculated under the condition that the frequency difference 1 has a specific value other than zero (0), the factor shift circuit 36 can identify the value of frequency variation of local light on the basis of the difference between the frequency difference 1 and the frequency difference 2. That is, on the basis of the value of the difference between the frequency difference 1 and the frequency difference 2, the factor shift circuit 36 shifts the value of the dispersion compensation factor 1 on the frequency axis by the amount of frequency variation corresponding to this value to generate the dispersion compensation factor 2.

In this way, in the third embodiment, the wavelength dispersion compensation circuit 33 compensates for waveform distortion due to wavelength dispersion using the dispersion compensation factor 2 output from the factor shift circuit 36. The factor shift circuit 36 corrects the dispersion compensation factor 1 output from the wavelength dispersion compensation factor calculation circuit 34 taking into consideration frequency variation of local light to generate the dispersion compensation factor 2.

That is, in the second embodiment, frequency variation of local light is dealt with by correcting frequency variation of a down-converted signal which is obtained by mixing the received optical signal and local light. In contrast, in the third embodiment, a down-converted signal which is obtained by mixing the received optical signal and local light is dealt with while remaining the influence of frequency variation of local light. Instead, waveform distortion due to wavelength dispersion is compensated for using the dispersion compensation factor 2 which is obtained by correcting the dispersion compensation factor 1 calculated under a reference condition taking into consideration frequency variation of local light.

When the frequency difference 2 is not input from the received signal demodulation circuit 35 or when the frequency difference 2 is identical to the frequency difference 1, the factor shift circuit 36 outputs the input dispersion compensation factor 1 as the dispersion compensation factor 2 without modification.

In the above-described embodiment, the wavelength dispersion compensation circuit 33 and the received signal demodulation circuit 35 may be logic circuits which can realize the functions. For example, integrated large scale integration (LSI) by CMOS, a field programmable gate array (FPGA), or a logic discrete circuit may be used.

As described above, in this embodiment, the value of the frequency difference $\Delta f$ (frequency difference 2) between the optical signal and local light which is obtained during the digital signal processing of the received signal in the received signal demodulation circuit 35 is used.

That is, under the condition that the frequency difference 1 is zero (0), by means of the value of $\Delta f$ (frequency difference 2), a transfer function H' (f) which gives dispersion compensation on a receiving compensation side is set to a value which is expressed by the following expression with respect to the transfer function H (f) of the transmission path.

$$H'(f) = H^{-1}(f - \Delta f) \qquad (4\text{-}1)$$

From Expression (2-3), a signal z(t) after the dispersion compensation is as expressed by the following expression.

$$z(t) = F^{-1}\{H'(f) \times H(f - \Delta f) \times X(f - \Delta f)\}$$
$$= F^{-1}\{H^{-1}(f - \Delta f) \times H(f - \Delta f) \times X(f - \Delta f)\} = x(t) \qquad (4\text{-}2)$$

As a result, in regard to the received signal, a signal with no timing variation component is restored.

As will be understood from Expression (4-1), the transfer function which gives dispersion compensation to be used in this embodiment corresponds to a case where the inverse transfer function $H^{-1}(f) = 1/H(f)$ of the transfer function $H(f)$ when the frequency difference 1 is zero (0) is deviated in the frequency axis direction by $\Delta f$ (frequency difference 2). Accordingly, the value of a function which is used for dispersion compensation may be shifted in the frequency axis direction.

Next, the wavelength dispersion compensation circuit 33 will be described.

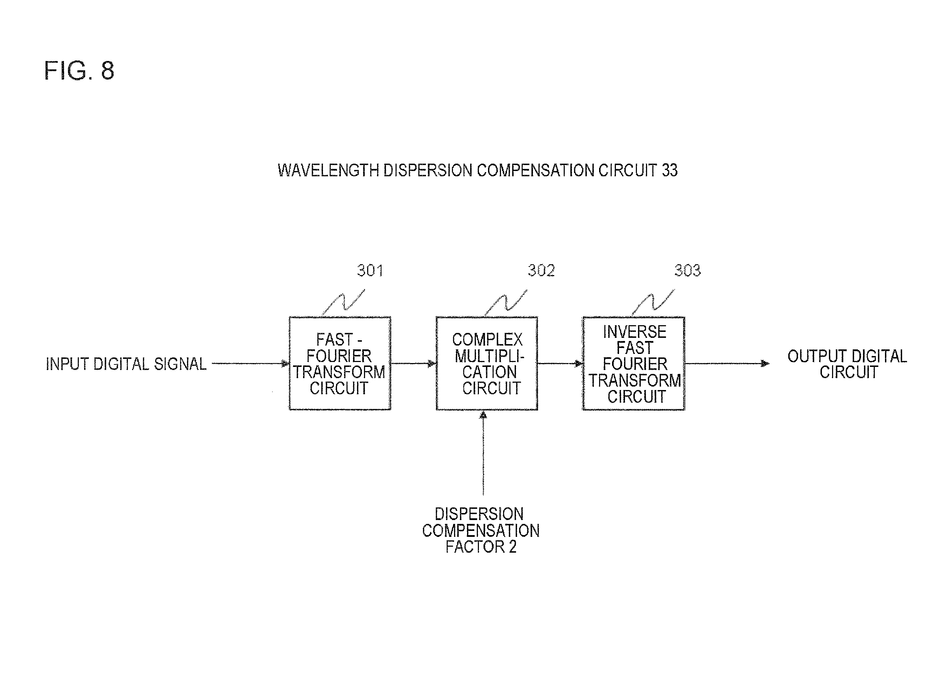

FIG. 8 is a block diagram illustrating a first configuration of the wavelength dispersion compensation circuit 33.

The wavelength dispersion compensation circuit having the first configuration has a fast Fourier transform circuit 301, a complex multiplication circuit 302, and an inverse fast Fourier transform circuit 303 to constitute a wavelength dispersion compensation filter.

The digital signal output from the coherent receiving circuit 31 is input to the fast Fourier transform circuit 301 of the wavelength dispersion compensation circuit 33. The input digital signal is the digital signal which is sampled with the number of samples N at a time step $\Delta t$ in the analog-to-digital converter of the coherent receiving circuit 31. The input digital signal is subjected to Fourier transform processing in terms of N pieces of data by the fast Fourier transform circuit 301 and output from the fast Fourier transform circuit 301 as a frequency spectrum (or a discrete frequency domain signal) of a frequency step $\Delta F = 1/(\Delta t N)$.

The complex multiplication circuit 302 multiplies the frequency spectrum output from the fast Fourier transform circuit 301 by the dispersion compensation factor 2 output from the factor shift circuit 36 and outputs the resultant frequency spectrum. That is, a signal output from the complex multiplication circuit 302 is the frequency spectrum in which waveform distortion due to wavelength dispersion is compensated for using the dispersion compensation factor 2 taking into consideration the value of frequency variation of local light.

The inverse fast Fourier transform circuit 303 performs inverse Fourier transform on the frequency spectrum, which is output from the complex multiplication circuit 302 and in which waveform distortion due to wavelength dispersion is compensated for, to restore a time domain signal and outputs the time domain signal.

The wavelength dispersion compensation circuit having the first configuration compensates for waveform distortion due to wavelength dispersion by the above-described configuration and operation.

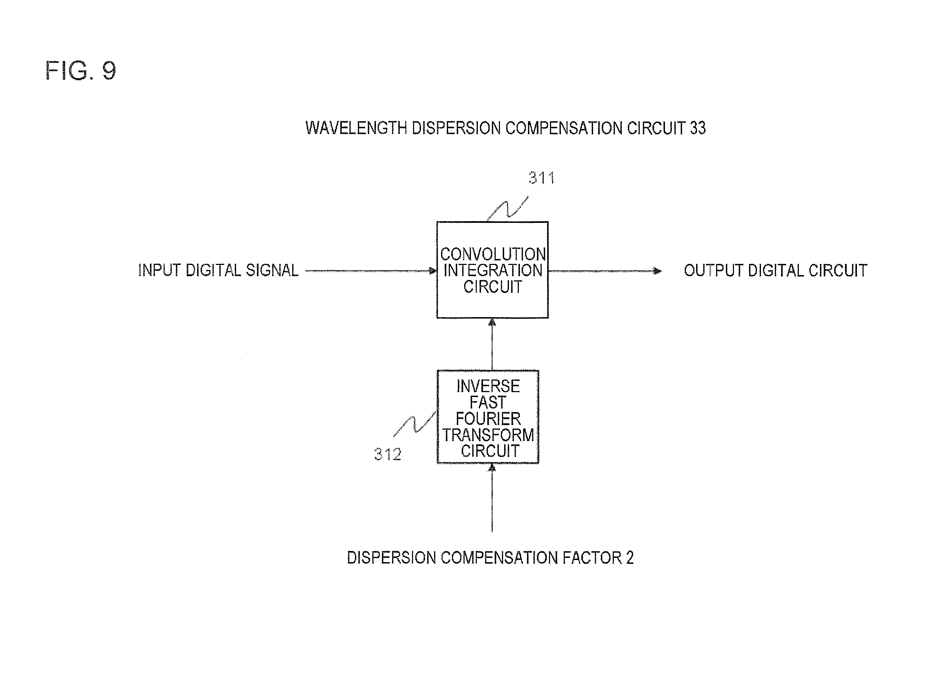

As described above, it should suffice that the wavelength dispersion compensation circuit 33 can compensate for wavelength dispersion using the dispersion compensation factor. For this reason, the wavelength dispersion compensation circuit 33 may have a second configuration illustrated in FIG. 9.

FIG. 9 is a block diagram illustrating the second configuration of the wavelength dispersion compensation circuit 33.

The wavelength dispersion compensation circuit having the second configuration includes a convolution integration circuit 311 and an inverse fast Fourier transform circuit 312 to constitute a wavelength dispersion compensation filter.

The wavelength dispersion compensation circuit having the second configuration converts the dispersion compensation factor 2 output from the factor shift circuit 36 to an impulse response using the inverse fast Fourier transform circuit 312. The impulse response is convolved with the input digital signal using the convolution integration circuit 311 to output the digital signal in which wavelength dispersion is compensated for. The convolution integration circuit 311 is realized by, for example, a finite impulse response (FIR) circuit.

Next, the operation to generate the dispersion compensation factor 2 in the factor shift circuit 36 will be described.

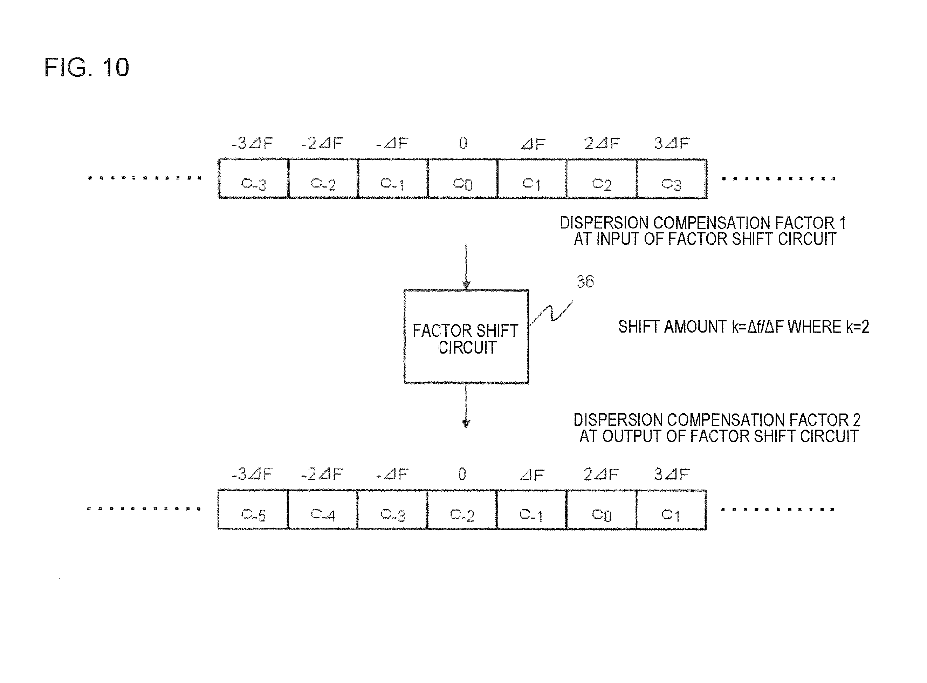

FIG. 10 is a schematic view illustrating the operation of the factor shift circuit.

FIG. 10 illustrates a state where the dispersion compensation factor 1 output from the wavelength dispersion compensation factor calculation circuit 34 is input to the factor shift circuit 36, subjected to shift processing taking into consideration of the value of frequency variation of local light in the factor shift circuit 36, and output as the dispersion compensation factor 2.

As described above, the dispersion compensation factor is expressed as the digitized transfer function and subjected to arithmetic operation with the digitized digital signal for the digital signal compensation processing. That is, each factor of the transfer function is accumulated in the memory in a predetermined amount to correspond to the frequency, and arithmetic operation is performed on the predetermined amount of data. FIG. 10 illustrates a data set in the form of an image of arrangement, and Cn in the drawing represents the arrangement of the factors of the digitized transfer function.

The dispersion compensation factor 1 output from the wavelength dispersion compensation factor calculation circuit 34 is calculated for each frequency step $\Delta F$.

The factor shift circuit 36 generates the dispersion compensation factor 2 from the dispersion compensation factor 1 using information regarding the frequency difference $\Delta f$ (frequency difference 2) between the frequency of the optical signal and the frequency of local light. That is, the factor shift circuit 36 shifts the arrangement of the input dispersion compensation factor I on the frequency axis by $k = \Delta f/\Delta F$ (closest integer value) to generate the dispersion compensation factor 2. FIG. 10 illustrates a case where $k = \Delta f/\Delta F = 2$.

In this way, similarly to the signal shift circuit 202 of the second embodiment, processing for shifting the arrangement of a predetermined amount of discrete signals accumulated in each memory at the frequency step $\Delta F$ by steps corresponding to a value to be corrected is called "shift processing on the frequency axis".

As described above, in this embodiment, the dispersion compensation factor 1 is calculated under the condition that the frequency difference 1 between the frequency of the received optical signal and the frequency of local light is zero (0) . For this reason, the factor shift circuit 36 can set the frequency difference 2 output from the received signal demodulation circuit 35 to $\Delta f$. If the frequency difference 1 when the dispersion compensation factor 1 is calculated is a specific value (for example, f1) other than zero (0) , when the frequency difference 2 output from the received signal demodulation circuit 35 is, for example, f2, k becomes $k = (f1- f2) / \Delta F$ (closest integer value) .

In the above-described manner, the wavelength dispersion compensation circuit 33 compensates for wavelength dispersion using the dispersion compensation factor 2 which is output from the factor shift circuit 36 taking into consideration the value of frequency variation of local light, and outputs the digital signal in which waveform distortion due to wavelength dispersion is compensated for.

The digital signal output from the wavelength dispersion compensation circuit 33 is input to the received signal demodulation circuit 35. The received signal demodulation circuit 35 compensates for the frequency difference and the phase difference between the optical signal and local light, demodulates a modulated multiple-value signal, and outputs a received signal. For the demodulation, for example, an M-th power algorithm or the like is used. The received signal demodulation circuit 35 detects the frequency difference between the frequency of the received optical signal and the frequency of local light during the demodulation processing, and outputs information regarding the frequency difference 2.

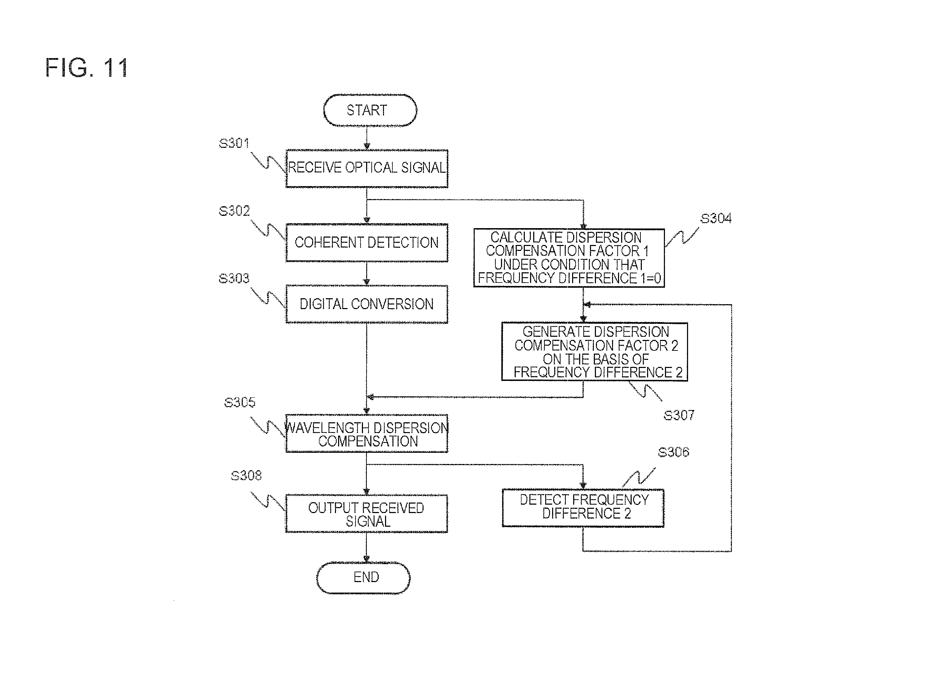

FIG. 11 is a flow diagram illustrating the operation of the coherent light receiving device of the third embodiment.

First, an optical signal which is influenced by waveform distortion due to wavelength dispersion is received (S301) . The received optical signal is mixed with local light, and optical coherent detection is performed to convert the optical signal to an electrical signal (S302) . The converted electrical signal is converted to a digital signal (S303) .

The dispersion compensation factor 1 for compensating for waveform distortion due to wavelength dispersion at the frequency of the received optical signal is calculated and output under the condition that the frequency difference between the frequency of the received optical signal and the frequency of local light is the frequency difference 1 = 0 (S304). Until the frequency difference 2 is detected and output, in S307, the dispersion compensation factor 1 is output as the dispersion compensation factor 2 without modification.

The converted digital signal is subjected to the wavelength dispersion compensation processing based on the dispersion compensation factor 2 (S305).

The demodulation processing is performed on the basis of the digital signal subjected to wavelength dispersion compensation, and the frequency difference between the frequency of the received optical signal and the frequency of local light received during the demodulation processing is detected and output as the frequency difference 2 (S306).

If the frequency difference 2 is detected and output, in S307, the dispersion compensation factor 1 is shifted on the frequency axis on the basis of the frequency difference 2 and the dispersion compensation factor 2 is output. In S305, wavelength dispersion is compensated for on the basis of the dispersion compensation factor 2 which is shifted on the basis of the frequency difference 2. As a result, the received signal with timing variation suppressed is output (S308).

As described above, in the third embodiment, the dispersion compensation factor 1 for compensating for wavelength dispersion at the frequency of the received optical signal is calculated under the condition that the frequency difference between the frequency of the received optical signal and the frequency of local light is the frequency difference 1 = 0 which becomes a specific value. Waveform distortion due to wavelength dispersion is compensated for using the transfer function (inverse transfer function) which has inverse characteristics to the transfer function causing waveform distortion. The dispersion compensation factor includes the digitized factor which is the transfer function (inverse transfer function).

When the frequency difference $2 \neq 0$ as the frequency difference between the frequency of the received optical signal and the frequency of local light detected during the demodulation of the digital signal, this means that the frequency difference between the optical signal and local light varies. For this reason, the dispersion compensation factor 2 which is shifted from the dispersion compensation factor 1 on the frequency axis in accordance with the varied frequency is generated, and wavelength dispersion compensation is performed on the basis of the dispersion compensation factor 2.

Of course, it will be apparent that, even if there is no condition that the frequency difference 1 = 0, the coherent light receiving device 3 of this embodiment can generate the dispersion compensation factor 2, which is shifted from the dispersion compensation factor 1 on the frequency axis in accordance with the varied frequency, on the basis of the value of the frequency difference 1 and the value of the frequency difference 2.

In this way, when a signal influenced by wavelength dispersion is received by intradyne detection, even if frequency variation of local light occurs, the coherent light receiving device 3 of this embodiment can output the received signal with timing variation suppressed.

Of course, the coherent light receiving device 3 of the third embodiment can be applied to the coherent light receiving system illustrated in FIG. 2.

Next, a coherent light receiving device according to a fourth embodiment of the invention will be described.

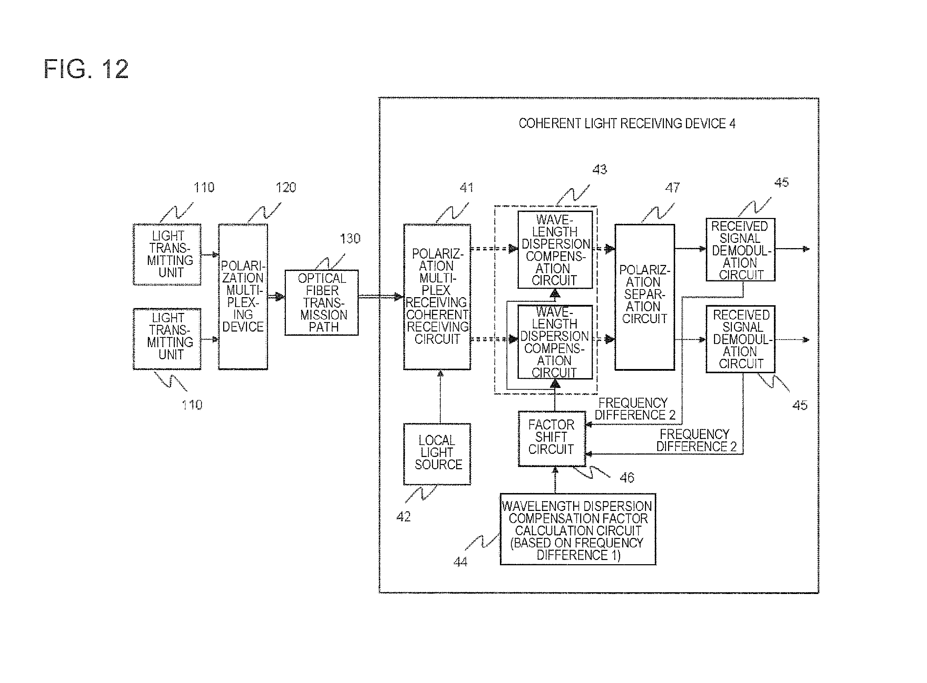

FIG. 12 is a block diagram illustrating the configuration of a coherent light receiving system using a coherent light receiving device 4 of the fourth embodiment. The coherent light receiving system transmits a signal using polarization multiplexing in addition to phase modulation so as to improve frequency use efficiency.

Light transmitting units 110 phase-modulate light in accordance with a signal to be transmitted and transmit the resultant signals. Two light transmitting units 110 are provided, and the transmission signal is allocated to two quadrature polarizations of light and transmitted. The optical signals which are transmitted from the two light transmitting units 110 are polarization-multiplexed by a polarization multiplexing device 120 and incident on an optical fiber transmission path 130.

The optical fiber transmission path 130 is a normal single-mode fiber, and wavelength dispersion D per unit length is, for example, about 17 ps/nm/km at a wavelength of 1.55 microns.

The coherent light receiving device 4 receives the polarization-multiplexed optical signal from the optical fiber transmission path 130.

The coherent light receiving device 4 includes a polarization multiplex receiving coherent receiving circuit 41, a local light source 42, a wavelength dispersion compensation circuit 43, a wavelength dispersion compensation factor calculation circuit 44, received signal demodulation circuits 45, a factor shift circuit 46, and a polarization separation circuit 47.

The polarization-multiplexed optical signal is separated into two polarization components (TE: Transverse Electric field/TM: Transverse Magnetic field mode) and quadrature-received in the polarization multiplex receiving coherent receiving circuit 41.

The polarization multiplex receiving coherent receiving circuit 41 separates the received optical signal and local light output from the local light source 42 into two polarization components (TE/TM). Thereafter, the optical signal and the local light are mixed for each polarization component, and resultant interference light is detected as an electrical signal by a photodetector (not shown). The electrical signal is subjected to analog-to-digital conversion in an analog-to-digital converter (not shown) and output from the polarization multiplex receiving coherent receiving circuit 41 as a digital signal. That is, the digital signal having an I component and a Q component is output for each polarization component.

In this embodiment, the local light source 42 may be a distributed feedback (DFB) semiconductor laser having a narrow line width.

The digital signal of each polarization component output from the polarization multiplex receiving coherent receiving circuit 41 is input to the wavelength dispersion compensation circuit 43 and subjected to wavelength dispersion compensation signal processing for each polarization component.

The digital signal which is output from the wavelength dispersion compensation circuit 43 and subjected to the wavelength dispersion compensation signal processing for each polarization component is separated into signals of two channels before multiplexing in the polarization multiplexing device 120 on the transmission side by the polarization separation circuit 47.

The separated signals of two channels are respectively input to the received signal demodulation circuits 45 and subjected to demodulation signal processing, and a received signal is output. Each received signal demodulation circuit 45 detects the frequency difference between the frequency of the optical signal and the frequency of local light, and outputs information regarding the frequency difference 2.

The wavelength dispersion compensation factor calculation circuit 44 calculates the dispersion compensation factor 1 for compensating for waveform distortion due to wavelength dispersion at the frequency of the received optical signal under the condition that the frequency difference between the frequency of the received optical signal and the frequency of local light is the frequency difference 1 which becomes a specific value.

In this embodiment, as in the third embodiment, the wavelength dispersion compensation factor calculation circuit 44 calculates and outputs the dispersion compensation factor 1, which is given by the wavelength dispersion D of the optical fiber transmission path, under the condition that the frequency difference 1 between the received optical signal and local light is zero (0).

The factor shift circuit 46 receives the dispersion compensation factor 1 output from the wavelength dispersion compensation factor calculation circuit 44 and information regarding the frequency differences 2 output from the two-channel received signal demodulation circuit 46 as input. In this case, the factor shift circuit 46 generates the dispersion compensation factor 2 using one or both of the information regarding the frequency differences 2 from the two-channel received signal demodulation circuit 46, and outputs the dispersion compensation factor 2 to the wavelength dispersion compensation circuit 43.

The factor shift circuit 46 generates the dispersion compensation factor 2 in the same manner as a case where the factor shift circuit 36 of the third embodiment generates the dispersion compensation factor 2 from the dispersion compensation factor 1 using the information regarding the frequency difference 2.

Although the information regarding the frequency differences 2 output from the two-channel received signal demodulation circuit 46 basically has the same value, there may be a difference between the values depending on a dispersion compensation algorithm, a receiving demodulation processing algorithm, or the like. For this reason, the factor shift circuit 46 can use the average value of the information regarding the two frequency differences 2 as information regarding the frequency differences 2. However, the calculation of a shift amount using the information regarding the two frequency differences 2 is not limited thereto, the factor shift circuit 46 may use a method of calculating a better value depending on a signal processing algorithm or the like.

The coherent light receiving device 4 of the fourth embodiment performs the same operation on the basis of the same principle as the coherent light receiving device 3 of the third embodiment illustrated in FIG. 7, except that the optical signal to be processed is polarization-multiplexed. Accordingly, while the wavelength dispersion compensation circuit 43 compensates for wavelength dispersion for each polarization component, the configuration of the wavelength dispersion compensation circuit may be the configuration illustrated in FIG. 8 or may be the configuration illustrated in FIG. 9. Of course, even if there is no condition that the frequency difference 1 = 0, the coherent light receiving device 4 of this embodiment can generate the dispersion compensation factor 2 which is shifted from the dispersion compensation factor 1 in accordance with the varied frequency, on the basis of the value of the frequency difference 1 and the value of the frequency difference 2.

In this way, when the optical signal which is polarization-multiplexed and influenced by wavelength dispersion is received by intradyne detection, even if frequency variation of local light occurs, the coherent light receiving device 4 of this embodiment can output the received signal with timing variation suppressed.

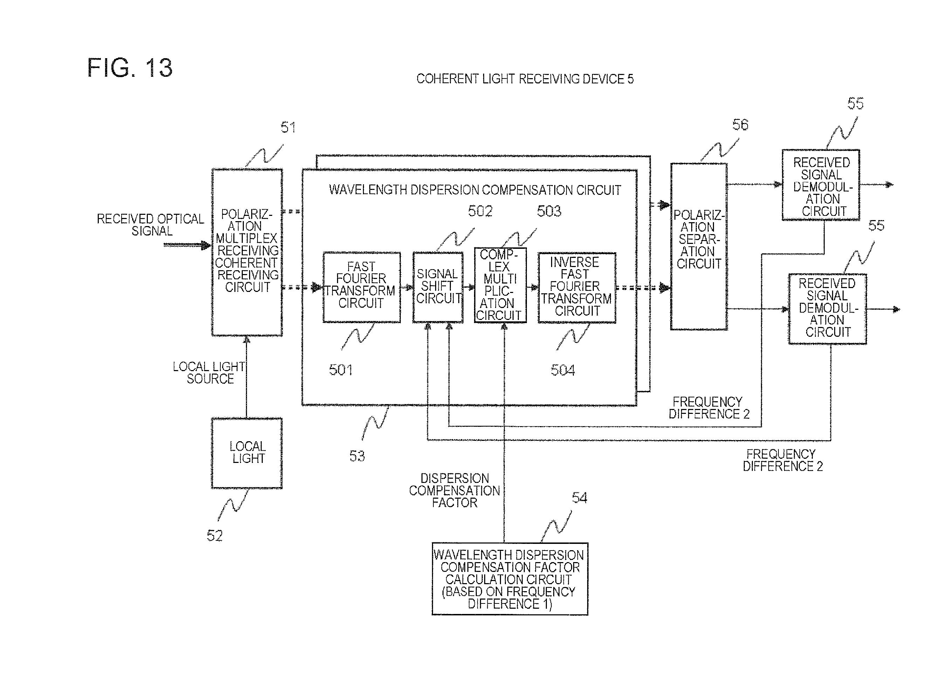

FIG. 13 is a block diagram illustrating the configuration of a coherent light receiving device of a fifth embodiment.

A coherent light receiving device 5 of the fifth embodiment has a configuration in which the coherent light receiving device 2 of the second embodiment illustrated in FIG. 3 is applied in the polarization multiplexing system illustrated in FIG. 12.

The coherent light receiving device 5 includes a polarization multiplex receiving coherent receiving circuit 51, a local light source 52, a wavelength dispersion compensation circuit 53, a wavelength dispersion compensation factor calculation circuit 54, received signal demodulation circuits 55, and a polarization separation circuit 56.

As in the fourth embodiment, the polarization-multiplexed optical signal is received by the polarization multiplex receiving coherent receiving circuit 51. The polarization multiplex receiving coherent receiving circuit 51 separates the received optical signal and local light output from the local light source 52 into two polarization components (TE/TM mode) and performs processing on the two polarization components.

In this embodiment, the local light source 52 may be a distributed feedback (DFB) semiconductor laser having a narrow line width.

The digital signal of each polarization component output from the polarization multiplex receiving coherent receiving circuit 51 is input to the wavelength dispersion compensation circuit 53 and subjected to wavelength dispersion compensation signal processing for each polarization component.

The digital signal which is subjected to the wavelength dispersion compensation signal processing for each polarization component and output from the wavelength dispersion compensation circuit 53 is separated into signals of two channels before multiplexing on the transmission side by the polarization separation circuit 56.

The separated signals of two channels are respectively input to the received signal demodulation circuits 55 and subjected to demodulation signal processing, and a received signal is output. Each received signal demodulation circuit 55 detects the frequency difference between the frequency of the optical signal and the frequency of local light, and outputs the frequency difference 2.

The wavelength dispersion compensation factor calculation circuit 54 calculates the dispersion compensation factor for compensating for wavelength dispersion at the frequency of the received optical signal under the condition that the frequency difference between the frequency of the received optical signal and the frequency of local light is the frequency difference 1 which becomes a specific value.

In this embodiment, as in the second embodiment, the wavelength dispersion compensation factor calculation circuit 54 calculates and outputs the dispersion compensation factor, which is given by the wavelength dispersion D of the optical fiber transmission path under the condition that the frequency difference 1 between the received optical signal and local light is zero (0).

As in the second embodiment, the wavelength dispersion compensation circuit 53 includes a fast Fourier transform circuit 501, a signal shift circuit 502, a complex multiplication circuit 503, and an inverse fast Fourier transform circuit 504. However, in order to perform the wavelength dispersion compensation signal processing for each polarization component, a wavelength dispersion compensation circuit corresponding to each polarization component is provided.

The digital signal input to the wavelength dispersion compensation circuit 53 is converted to a frequency spectrum by the fast Fourier transform circuit 501. The frequency spectrum output from the fast Fourier transform circuit 501 is input to the signal shift circuit 502, and as in the second embodiment, is subjected to shift processing on the basis of the frequency difference 2. While the signal shift circuit 502 receives information regarding the frequency differences 2 from the two-channel received signal demodulation circuit 56 as input, the signal shift circuit 502 performs shift processing using the average value of the information regarding the two frequency differences 2 using one or both of the information regarding the frequency differences 2.

The frequency spectrum which is output from the signal shift circuit 502 and subjected to the shift processing on the basis of the frequency difference 2 is input to the complex multiplication circuit 503. The frequency spectrum is multiplied to the dispersion compensation factor output from the wavelength dispersion compensation factor calculation circuit 54, whereby waveform distortion due to wavelength dispersion is compensated for. The output of the complex multiplication circuit 503 subjected to wavelength dispersion compensation is converted to a time domain signal by the inverse fast transform 504, and the time domain signal is output as the output of the wavelength dispersion compensation circuit 53.

The coherent light receiving device 5 of the fifth embodiment performs the same operation on the basis of the same principle as the coherent light receiving device 2 of the second embodiment illustrated in FIG. 3, except that the optical signal to be processed is polarization-multiplexed. Of course, even if there is no condition that the frequency difference 1 = 0, the coherent light receiving device 5 of this embodiment can shift the frequency spectrum of the digital signal on the basis of the value of the frequency difference 1 and the value of the frequency difference 2.

In this way, when a signal which is polarization-multiplexed and influenced by wavelength dispersion is received by intradyne detection, even if variation in frequency variation of local light occurs, the coherent light receiving device 5 of this embodiment can output a received signal in which timing variation is suppressed.

In regard to the foregoing embodiments, the following supplementary notes are disclosed.

(Supplementary Note 1) A coherent light receiving device including a coherent receiving unit which receives an optical signal including waveform distortion due to wavelength dispersion, mixes the optical signal with local light, performs optical coherent detection to convert the optical signal to an electrical signal, converts the converted electrical signal to a digital signal, and outputs the digital signal, a wavelength dispersion compensation unit which compensates for waveform distortion in the digital signal output from the coherent receiving unit and outputs a digital signal after compensation, and a frequency difference detection unit which receives the digital signal after compensation output from the wavelength dispersion compensation unit, detects the frequency difference between the frequency of the optical signal and the frequency of local light, and notifies the wavelength dispersion compensation unit of the frequency difference, wherein the wavelength dispersion compensation unit performs compensation using a transfer function which is based on the frequency difference notified from the frequency difference detection unit and represents waveform distortion due to wavelength dispersion.

(Supplementary Note 2) The coherent light receiving device described in Supplementary Note 1, wherein the transfer function is a transfer function which represents waveform distortion due to wavelength dispersion at the frequency of the optical signal under the condition that the frequency difference between the frequency of the optical signal and the frequency of local light is a frequency difference f1 which becomes a specific value, and the wavelength dispersion compensation unit performs the compensation using a second dispersion compensation factor obtained by shifting a dispersion compensation factor for compensating for waveform distortion represented by the transfer function on a frequency axis with an integer value closest to (f1-f2) / $\Delta$F as a shift amount with respect to the frequency difference f1, a second frequency difference f2 notified from the frequency difference detection unit, and a frequency step $\Delta$F of the dispersion compensation factor.

(Supplementary Note 3) A coherent light receiving device including a coherent receiving unit which receives an optical signal including waveform distortion due to wavelength dispersion, mixes the optical signal with local light, performs optical coherent detection to convert the optical signal to an electrical signal, converts the converted electrical signal to a digital signal, and outputs the digital signal, a wavelength dispersion compensation unit which compensates for waveform distortion in the digital signal output from the coherent receiving unit and outputs a digital signal after compensation, and a frequency difference detection unit which receives the digital signal after compensation output from the wavelength dispersion compensation unit, detects the frequency difference between the frequency of the optical signal and the frequency of local light, and notifies the wavelength dispersion compensation unit of the frequency difference, wherein the wavelength dispersion compensation unit converts the digital signal output from the coherent receiving unit to a frequency spectrum and shifts the frequency spectrum after conversion on a frequency axis on the basis of the frequency difference so as to compensate for the frequency difference.

(Supplementary Note 4) The coherent light receiving device described in Supplementary Note 3, wherein the wavelength dispersion compensation unit shifts the frequency spectrum on a frequency axis with an integer value closest to (f1-f2) / $\Delta$F as a shift amount with respect to a frequency difference f1 which becomes a specific value as the frequency difference between the frequency of the optical signal and the frequency of local light, a second frequency difference f2 notified from the frequency difference detection unit, and a frequency step $\Delta$F of the frequency spectrum, and uses a dispersion compensation factor for compensating for waveform distortion due to wavelength dispersion at the frequency of the optical signal in the frequency difference f1.

(Supplementary Note 5) The coherent light receiving device described in any one of Supplementary Notes 1 to 4, wherein the coherent receiving unit has a polarization separation unit which receives a polarization multiplexed optical signal and separates the polarization multiplexed optical signal for each polarization component, and the optical signal including waveform distortion due to wavelength dispersion is the optical signal separated by the polarization separation unit.

(Supplementary Note 6) A coherent light receiving method includes receiving an optical signal including waveform distortion due to wavelength dispersion, mixing the optical signal with local light, performing optical coherent detection to convert the optical signal to an electrical signal, and converting the converted electrical signal to a digital signal, compensating for waveform distortion in the converted digital signal, and detecting the frequency difference between the frequency of the optical signal and the frequency of local light from the digital signal after compensation, wherein, when compensating for waveform distortion, the compensation is performed using a transfer function which is based on the detected frequency difference and represents waveform distortion due to wavelength dispersion.

(Supplementary Note 7) A coherent light receiving method including receiving an optical signal including waveform distortion due to wavelength dispersion, mixing the optical signal with local light, performing optical coherent detection to convert the optical signal to an electrical signal, and converting the converted electrical signal to a digital signal, compensating for waveform distortion in the converted digital signal, and detecting the frequency difference between the frequency of the optical signal and the frequency of local light from the digital signal after compensation, wherein, when compensating for waveform distortion, the digital signal is converted to a frequency spectrum and the frequency spectrum after conversion is shifted on a frequency axis on the basis of the frequency difference so as to compensate for the frequency difference.

(Supplementary Note 8) A coherent light receiving system including a light transmitting unit which transmits a modulated signal as an optical signal, an optical fiber transmission path through which the optical signal is transmitted, and the coherent light receiving device described in Supplementary Note 1.

(Supplementary Note 9) The coherent light receiving system described in Supplementary Note 8, wherein the coherent light receiving device is the coherent light receiving device described in Supplementary Note 3.

(Supplementary Note 10) A coherent light receiving device including a coherent receiving unit which mixes a received optical signal influenced by waveform distortion due to wavelength dispersion with local light, performs optical coherent detection to convert the optical signal to an electrical signal, converts the converted electrical signal to a digital signal, and outputs the digital signal, a wavelength dispersion compensation unit which compensates for waveform distortion due to wavelength dispersion in the digital signal output from the coherent receiving unit using a digitized transfer function and outputs the digital signal after compensation, a wavelength dispersion compensation factor calculation unit which calculates and outputs a dispersion compensation factor including a digitized factor as the transfer function for compensating waveform distortion due to wavelength dispersion at the frequency of the received optical signal under the condition that the frequency difference between the frequency of the received optical signal and the frequency of local light is a first frequency difference which becomes a specific value, and a frequency difference detection unit which detects the frequency difference between the frequency of the received optical signal and the frequency of local light and outputs the detected frequency difference as a second frequency difference during demodulation of the digital signal output from the wavelength dispersion compensation unit to a received signal, wherein the wavelength dispersion compensation unit shifts the frequency spectrum of the digital signal, in which waveform distortion due to wavelength dispersion is to be compensated for, on a frequency axis on the basis of the second frequency difference and performs compensation for waveform distortion due to wavelength dispersion based on the dispersion compensation factor with respect to the frequency spectrum shifted on the frequency axis.

(Supplementary Note 11) The coherent light receiving device described in Supplementary Note 10, further including a factor shift unit which receives the dispersion compensation factor output from the wavelength dispersion compensation factor calculation unit and the second frequency difference output from the frequency difference detection unit as input, shifts the dispersion compensation factor on the frequency axis on the basis of the differential frequency between the second frequency difference and the first frequency difference, and outputs a second dispersion compensation factor, wherein the wavelength dispersion compensation unit compensates for waveform distortion due to wavelength dispersion on the basis of the second dispersion compensation factor.

(Supplementary Note 12) The coherent light receiving device described in Supplementary Note 11, wherein the factor shift unit shifts the dispersion compensation factor on the frequency axis with an integer value closest to (f1-f2) / $\Delta$F as a shift amount with respect to the first frequency difference f1, the second frequency difference f2, and a frequency step $\Delta$F of the first dispersion compensation factor, and outputs the second dispersion compensation factor.

(Supplementary Note 13) The coherent light receiving device described in Supplementary Note 10, wherein the wavelength dispersion compensation unit includes a signal shift unit which shifts the frequency spectrum of the digital signal, in which waveform distortion due to wavelength dispersion is to be compensated for, on the frequency axis on the basis of the differential frequency between the second frequency difference and the first frequency difference.

(Supplementary Note 14) The coherent light receiving device described in Supplementary Note 13, wherein the signal shift unit shifts the frequency spectrum on the frequency axis with an integer value closest to $(f1-f2)/\Delta F$ as a shift amount with respect to the first frequency difference f1, the second frequency difference f2, and a frequency step $\Delta F$ of the frequency spectrum.

(Supplementary Note 15) The coherent light receiving device described in Supplementary Note 13 or 14, wherein the wavelength dispersion compensation unit includes a Fourier transform unit which performs a Fourier transform on an input digital signal to output a frequency spectrum to the signal shift unit, a complex multiplication unit which complex-multiplies the frequency spectrum shifted on the frequency axis output from the signal shift unit by the dispersion compensation factor, and an inverse Fourier transform unit which receives the frequency spectrum complex-multiplied by the dispersion compensation factor as input and performs an inverse Fourier transform to output a digital signal.

(Supplementary Note 16) The coherent light receiving device described in Supplementary Note 12, wherein the wavelength dispersion compensation unit includes a Fourier transform unit which performs a Fourier transform on an input digital signal to output a frequency spectrum, a complex multiplication unit which complex-multiplies the frequency spectrum output from the Fourier transform unit by the second dispersion compensation factor, and an inverse Fourier transform unit which receives the frequency spectrum complex-multiplied by the second dispersion compensation factor and performs an inverse Fourier transform to output a digital signal.

(Supplementary Note 17) The coherent light receiving device described in Supplementary Note 12, wherein the wavelength dispersion compensation unit includes an impulse response conversion unit which performs an inverse Fourier transform on the second dispersion compensation factor to generate an impulse response signal, and a convolution integration unit which convolves an input digital signal and the impulse response signal output from the impulse response conversion unit.

(Supplementary Note 18) The coherent light receiving device described in any one of Supplementary Notes 10 to 17, wherein the coherent receiving unit is a polarization multiplex receiving coherent receiving unit which receives a polarization-multiplexed received optical signal influenced by waveform distortion due to wavelength dispersion, mixes the received optical signal for each polarization component with local light, performs optical coherent detection to convert the received optical signal to an electrical signal, converts the converted electrical signal to a digital signal for each polarization component, and outputs the digital signal, includes wavelength dispersion compensation units each of which compensates for waveform distortion due to wavelength dispersion in the digital signal for each polarization component output from the polarization multiplex receiving coherent receiving unit using a digitized transfer function and outputs the digital signal, and further includes a polarization separation unit which receives the output signals of the wavelength dispersion compensation units as input, performs polarization separation, and outputs the resultant signals, and the frequency difference detection unit has frequency difference detection units which correspond to the signals separated by the polarization separation unit.

(Supplementary Note 19) A coherent light receiving method including mixing a received optical signal influenced by waveform distortion due to wavelength dispersion with local light, performing optical coherent detection to convert the received optical signal to an electrical signal, converting the converted electrical signal to a digital signal, compensating for waveform distortion due to wavelength dispersion in the converted digital signal using a digitized transfer function, and outputs the digital signal, calculating and outputting a dispersion compensation factor including a digitized factor which is the transfer function for compensating for waveform distortion due to wavelength dispersion as the frequency of the received optical signal under the condition that the frequency difference between the frequency of the received optical signal and the frequency of local light is a first frequency difference which becomes a specific value, and detecting the frequency difference between the frequency of the received optical signal and the frequency of local light while the digital signal in which waveform distortion due to wavelength dispersion is compensated for is demodulated to a received signal and outputting the frequency difference as a second frequency difference, wherein, when compensating for waveform distortion due to wavelength dispersion, the frequency spectrum of the digital signal, in which waveform distortion due to wavelength dispersion is compensated for, is shifted on a frequency axis on the basis of the second frequency difference and the compensation for waveform distortion due to wavelength dispersion based on the dispersion compensation factor is performed on the frequency spectrum shifted on the frequency axis.

(Supplementary Note 20) The coherent light receiving method described in Supplementary Note 19, further including inputting the dispersion compensation factor and the second frequency difference, and shifting the dispersion compensation factor on the frequency axis on the basis of the differential frequency between the second frequency difference and the first frequency difference to further output a second dispersion compensation factor, wherein, when compensating for waveform distortion due to wavelength dispersion, wavelength dispersion is compensated for on the basis of the second dispersion compensation factor.

(Supplementary Note 21) The coherent light receiving method described in Supplementary Note 20, wherein the second dispersion compensation factor is generated by shifting the dispersion compensation factor on the frequency axis with an integer value closest to (f1-f2) / $\Delta$F as a shift amount with respect to the first frequency difference f1, the second frequency difference f2, and a frequency step $\Delta$F of the dispersion compensation factor.

(Supplementary Note 22) The coherent light receiving method described in Supplementary Note 19, wherein, when compensating for waveform distortion due to wavelength dispersion, the frequency spectrum of the digital signal in which waveform distortion due to wavelength dispersion is to be compensated for is shifted on the frequency axis on the basis of the differential frequency between the second frequency difference and the first frequency difference.

(Supplementary Note 23) The coherent light receiving method described in Supplementary Note 22, wherein the frequency spectrum is shifted on the frequency axis with an integer value closest to (f1-f2) / $\Delta$F as a shift amount with respect to the first frequency difference f1, the second frequency difference f2, and a frequency sep $\Delta$F of the frequency spectrum.

(Supplementary Note 24) The coherent light receiving method described in Supplementary Note 22 or 23, wherein, when compensating for waveform distortion due to wavelength dispersion, a Fourier transform is performed on an input digital signal to output a frequency spectrum, the frequency spectrum is shifted on the frequency axis on the basis of the differential frequency between the second frequency difference and the first frequency difference, the frequency spectrum shifted on the frequency axis is complex-multiplied by the dispersion compensation factor, and inverse Fourier transform is performed on the frequency spectrum complex-multiplied by the dispersion compensation factor to output a digital signal.

(Supplementary Note 25) The coherent light receiving method described in Supplementary Note 21, wherein, when compensating for waveform distortion due to wavelength dispersion, a Fourier transform is performed on an input digital signal to output a frequency spectrum, the frequency spectrum is complex-multiplied by the second dispersion compensation factor, and an inverse Fourier transform is performed on the frequency spectrum complex-multiplied by the second dispersion compensation factor to output a digital signal.

(Supplementary Note 26) The coherent light receiving method described in Supplementary Note 21, wherein, when compensating for waveform distortion due to wavelength dispersion, an inverse Fourier transform is performed on the second dispersion compensation factor to generate an impulse response, and an input digital signal and the impulse response are convolved.

(Supplementary Note 27) The coherent light receiving method described in any one of Supplementary Notes 19 to 26, wherein the received optical signal is a polarization-multiplexed received optical signal, coherent detection is performed for each polarization component to convert the optical signal to an electrical signal, the converted electrical signal is converted to a digital signal for each polarization component, when compensating for waveform distortion due to wavelength dispersion, waveform distortion due to wavelength dispersion in the digital signal for each polarization component is compensated for using a digitized transfer function, the digital signal in which waveform distortion due to wavelength dispersion is compensated for is polarization-separated for each polarization component, and the output of the second frequency difference is output while each polarization-separated digital signal is demodulated to a received signal.

(Supplementary Note 28) A coherent light receiving system including a light transmitting unit which transmits a modulated signal as an optical signal, an optical fiber transmission path through which the optical signal is transmitted, and the coherent light receiving device described in Supplementary Note 10.

(Supplementary Note 29) The coherent light receiving system described in Supplementary Note 28, wherein the coherent light receiving device is the coherent light receiving device described in Supplementary Note 11.

(Supplementary Note 30) The coherent light receiving system described in Supplementary Note 28, wherein the coherent light receiving device is the coherent light receiving device described in Supplementary Note 12.

(Supplementary Note 31) The coherent light receiving system described in Supplementary Note 28, wherein the coherent light receiving device is the coherent light receiving device described in Supplementary Note 13.

(Supplementary Note 32) The coherent light receiving system described in Supplementary Note 28, wherein the coherent light receiving device is the coherent light receiving device described in Supplementary Note 14.

(Supplementary Note 33) The coherent light receiving system described in Supplementary Note 28, wherein the coherent light receiving device is the coherent light receiving device described in Supplementary Note 15.

(Supplementary Note 34) The coherent light receiving system described in Supplementary Note 28, wherein the coherent light receiving device is the coherent light receiving device described in Supplementary Note 16.

(Supplementary Note 35) The coherent light receiving system described in Supplementary Note 28, wherein the coherent light receiving device is the coherent light receiving device described in Supplementary Note 17.

(Supplementary Note 36) A coherent light receiving system including two light transmitting units which allocate a modulated signal to two quadrature polarization of light and transmit the modulated signal, a polarization multiplexing device which polarization-multiplexes optical signals output from the two light transmitting unit, an optical fiber transmission path through which the polarization-multiplexed optical signal output from the polarization multiplexing device is transmitted, and the coherent light receiving device described in Supplementary Note 18.

This application claims priority based on Japanese Patent Application No. 2010-245176, filed on November 1, 2010, the entire disclosure thereof is incorporated herein.

**Claims**

1. A coherent light receiving device comprising:

a coherent receiving unit which receives an optical signal including waveform distortion due to wavelength dispersion, mixes the optical signal with local light, performs optical coherent detection to convert the optical signal to an electrical signal, converts the converted electrical signal to a digital signal, and outputs the digital signal;
a wavelength dispersion compensation unit which compensates for waveform distortion in the digital signal output from the coherent receiving unit and outputs a digital signal after compensation; and
a frequency difference detection unit which receives the digital signal after compensation output from the wavelength dispersion compensation unit, detects the frequency difference between the frequency of the optical signal and the frequency of local light, and notifies the wavelength dispersion compensation unit of the frequency difference,
wherein the wavelength dispersion compensation unit performs compensation using a transfer function which is based on the frequency difference notified from the frequency difference detection unit and represents waveform distortion due to wavelength dispersion.

2. The coherent light receiving device according to claim 1,
wherein the transfer function is a transfer function which represents waveform distortion due to wavelength dispersion at the frequency of the optical signal under the condition that the frequency difference between the frequency of the optical signal and the frequency of local light is a frequency difference f1 which becomes a specific value, and
the wavelength dispersion compensation unit performs the compensation using a second dispersion compensation factor obtained by shifting a dispersion compensation factor for compensating for waveform distortion represented by the transfer function on a frequency axis with an integer value closest to (f1-f2) / $\Delta$F as a shift amount with respect to the frequency difference f1, a second frequency difference f2 notified from the frequency difference detection unit, and a frequency step $\Delta$F of the dispersion compensation factor.

3. A coherent light receiving device comprising:

a coherent receiving unit which receives an optical signal including waveform distortion due to wavelength dispersion, mixes the optical signal with local light, performs optical coherent detection to convert the optical signal to an electrical signal, converts the converted electrical signal to a digital signal, and outputs the digital signal;
a wavelength dispersion compensation unit which compensates for waveform distortion in the digital signal output from the coherent receiving unit and outputs a digital signal after compensation; and
a frequency difference detection unit which receives the digital signal after compensation output from the wavelength dispersion compensation unit, detects the frequency difference between the frequency of the optical signal and the frequency of local light, and notifies the wavelength dispersion compensation unit of the frequency difference,
wherein the wavelength dispersion compensation unit changes the frequency of the digital signal output from the coherent receiving unit on the basis of the frequency difference so as to compensate for the frequency difference, and compensates for waveform distortion in the digital signal after frequency change.

4. The coherent light receiving device according to claim 3,
wherein the wavelength dispersion compensation unit converts the digital signal output from the coherent receiving unit to a frequency spectrum, shifts the frequency spectrum on a frequency axis with an integer value closest to (f1-f2) / $\Delta$F as a shift amount with respect to a frequency difference f1 which becomes a specific value as the frequency difference between the frequency of the optical signal and the frequency of local light, a second frequency difference f2 notified from the frequency difference detection unit, and a frequency step $\Delta$F of the frequency spectrum, and uses a dispersion compensation factor for compensating for waveform distortion due to wavelength dispersion at the frequency of the optical signal in the frequency difference f1.

5. The coherent light receiving device according to any one of claims 1 to 4,

wherein the coherent receiving unit has a polarization separation unit which receives a polarization multiplexed optical signal and separates the polarization multiplexed optical signal for each polarization component, and the optical signal including waveform distortion due to wavelength dispersion is the optical signal separated by the polarization separation unit.

6. A coherent light receiving method comprising:

receiving an optical signal including waveform distortion due to wavelength dispersion, mixing the optical signal with local light, performing optical coherent detection to convert the optical signal to an electrical signal, and converting the converted electrical signal to a digital signal;

compensating for waveform distortion in the converted digital signal; and

detecting the frequency difference between the frequency of the optical signal and the frequency of local light from the digital signal after compensation,

wherein, when compensating for waveform distortion, the compensation is performed using a transfer function which is based on the detected frequency difference and represents waveform distortion due to wavelength dispersion.

7. A coherent light receiving method comprising:

receiving an optical signal including waveform distortion due to wavelength dispersion, mixing the optical signal with local light, performing optical coherent detection to convert the optical signal to an electrical signal, and converting the converted electrical signal to a digital signal,

compensating for waveform distortion in the converted digital signal; and

detecting the frequency difference between the frequency of the optical signal and the frequency of local light from the digital signal after compensation,

wherein, when compensating for waveform distortion, the digital signal is converted to a frequency spectrum and the frequency spectrum after conversion is shifted on a frequency axis on the basis of the frequency difference so as to compensate for the frequency difference.

8. A coherent light receiving system comprising:

a light transmitting unit which transmits a modulated signal as an optical signal;

an optical fiber transmission path through which the optical signal is transmitted; and

the coherent light receiving device according to claim 1.

9. The coherent light receiving system according to claim 8,

wherein the coherent light receiving device is the coherent light receiving device according to claim 3.

FIG. 1

COHERENT LIGHT RECEIVING DEVICE 1

RECEIVED OPTICAL
SIGNAL

11

COHERENT
RECEIVING
UNIT

12

WAVELENGTH
DISPERSION
COMPENSATION
UNIT

13

FREQUENCY
DIFFERENCE
DETECTION
UNIT

RECEIVED
SIGNAL

FREQUENCY
DIFFERENCE

LOCAL LIGHT

FIG. 2

```
                                    2                          3                            1
                                  ┌─┐                        ┌─┐                          ┌─┐
         ┌──────────────┐          ┌──────────────┐          ┌────────────────────┐
         │    LIGHT     │          │ OPTICAL FIBER│          │                    │
         │ TRANSMITTING │ ───────▶ │ TRANSMISSION │ ───────▶ │  COHERENT LIGHT    │
         │    UNIT      │          │    PATH      │          │ RECEIVING DEVICE 1 │
         │              │          │              │          │                    │
         └──────────────┘          └──────────────┘          └────────────────────┘
```

FIG. 3

START

S101 → RECEIVE OPTICAL SIGNAL

S102 → COHERENT DETECTION

S103 → DIGITAL CONVERSION

FREQUENCY DIFFERENCE

S104 — WAVELENGTH DISPERSION COMPENSATION

S105 — DETECT FREQUENCY DIFFERENCE

S106 — OUTPUT RECEIVED SIGNAL

END

EP 2 637 323 A1

FIG. 4

COHERENT LIGHT RECEIVING DEVICE 2

RECEIVED OPTICAL SIGNAL

LOCAL LIGHT

21 COHERENT RECEIVING CIRCUIT

22 LOCAL LIGHT SOURCE

23 WAVELENGTH DISPERSION COMPENSATION CIRCUIT

201 FAST FOURIER TRANSFORM CIRCUIT

202 SIGNAL SHIFT CIRCUIT

203 COMPLEX MULTI-PLICATION CIRCUIT

204 INVERSE FAST FOURIER TRANSFORM CIRCUIT

25 RECEIVED SIGNAL DEMODU-LATION CIRCUIT

RECEIVED SIGNAL

24 WAVELENGTH DISPERSION COMPENSATION FACTOR CALCULATION CIRCUIT (BASED ON FREQUENCY DIFFERENCE 1)

DISPERSION COMPENSATION FACTOR

FREQUENCY DIFFERENCE 2

# FIG. 5

|  | $-3\Delta F$ | $-2\Delta F$ | $-\Delta F$ | 0 | $\Delta F$ | $2\Delta F$ | $3\Delta F$ |  |
|---|---|---|---|---|---|---|---|---|
| · · · · · · · · · · · | $S_{-3}$ | $S_{-2}$ | $S_{-1}$ | $S_0$ | $S_1$ | $S_2$ | $S_3$ | · · · · · · · · · · |

FREQUENCY SPECTRUM AT INPUT
OF SIGNAL SHIFT CIRCUIT

SIGNAL SHIFT
CIRCUIT

202

SHIFT AMOUNT $k=\Delta f/\Delta F$ WHERE $k=2$

FREQUENCY SPECTRUM AT OUTPUT
OF SIGNAL SHIFT CIRCUIT

|  | $-3\Delta F$ | $-2\Delta F$ | $-\Delta F$ | 0 | $\Delta F$ | $2\Delta F$ | $3\Delta F$ |  |
|---|---|---|---|---|---|---|---|---|
| · · · · · · · · · · · | $S_{-1}$ | $S_0$ | $S_1$ | $S_2$ | $S_3$ | $S_4$ | $S_5$ | · · · · · · · · · · |

EP 2 637 323 A1

FIG. 6

START

S201 — RECEIVE OPTICAL SIGNAL

S202 — COHERENT DETECTION

S203 — DIGITAL CONVERSION

S206 — SHIFT FREQUENCY SPECTRUM OF DIGITAL SIGNAL ON THE BASIS OF FREQUENCY DIFFERENCE 2

S204 — CALCULATE DISPERSION COMPENSATION FACTOR UNDER CONDITION THAT FREQUENCY DIFFERENCE 1=0

DISPERSION COMPENSATION FACTOR

S207 — WAVELENGTH DISPERSION COMPENSATION

S208 — OUTPUT RECEIVED SIGNAL

END

S205 — DETECT FREQUENCY DIFFERENCE 2

FREQUENCY DIFFERENCE 2

FIG. 7

COHERENT LIGHT RECEIVING DEVICE 3

COHERENT LIGHT RECEIVING DEVICE 3

RECEIVED OPTICAL SIGNAL →

LOCAL LIGHT

**31** COHERENT RECEIVING CIRCUIT

**33** WAVELENGTH DISPERSION COMPENSATION CIRCUIT

**35** RECEIVED SIGNAL DEMODULATION CIRCUIT → RECEIVED SIGNAL

DISPERSION COMPENSATION FACTOR 2

**36** FACTOR SHIFT CIRCUIT

FREQUENCY DIFFERENCE 2

**32** LOCAL LIGHT SOURCE

DISPERSION COMPENSATION FACTOR 1

**34** WAVELENGTH DISPERSION COMPENSATION FACTOR CALCULATION CIRCUIT (BASED ON FREQUENCY DIFFERENCE 1)

EP 2 637 323 A1

## FIG. 8

WAVELENGTH DISPERSION COMPENSATION CIRCUIT 33

INPUT DIGITAL SIGNAL →

301
**FAST-FOURIER TRANSFORM CIRCUIT**

302
**COMPLEX MULTIPLI-CATION CIRCUIT**

303
**INVERSE FAST FOURIER TRANSFORM CIRCUIT**

→ OUTPUT DIGITAL CIRCUIT

DISPERSION COMPENSATION FACTOR 2

# FIG. 9

WAVELENGTH DISPERSION COMPENSATION CIRCUIT 33

INPUT DIGITAL SIGNAL ⟶ [CONVOLUTION INTEGRATION CIRCUIT] 311 ⟶ OUTPUT DIGITAL CIRCUIT

[INVERSE FAST FOURIER TRANSFORM CIRCUIT] 312

DISPERSION COMPENSATION FACTOR 2

EP 2 637 323 A1

## FIG. 10

|  | -3⊿F | -2⊿F | -⊿F | 0 | ⊿F | 2⊿F | 3⊿F |  |
|---|---|---|---|---|---|---|---|---|
| · · · · · · · · · · · | $c_{-3}$ | $c_{-2}$ | $c_{-1}$ | $c_0$ | $c_1$ | $c_2$ | $c_3$ | · · · · · · · · · · · |

DISPERSION COMPENSATION FACTOR 1
AT INPUT OF FACTOR SHIFT CIRCUIT

FACTOR SHIFT
CIRCUIT                    36

SHIFT AMOUNT k=Δf/ΔF WHERE k=2

DISPERSION COMPENSATION FACTOR 2
AT OUTPUT OF FACTOR SHIFT CIRCUIT

|  | -3⊿F | -2⊿F | -⊿F | 0 | ⊿F | 2⊿F | 3⊿F |  |
|---|---|---|---|---|---|---|---|---|
| · · · · · · · · · · · | $c_{-5}$ | $c_{-4}$ | $c_{-3}$ | $c_{-2}$ | $c_{-1}$ | $c_0$ | $c_1$ | · · · · · · · · · · · |

EP 2 637 323 A1

# FIG. 11

```
                    ┌─────────┐
                    │  START  │
                    └─────────┘
                         │
                         ▼
S301          ┌──────────────────────┐
              │ RECEIVE OPTICAL SIGNAL│
              └──────────────────────┘
                    │              │
                    ▼              ▼
S302    ┌──────────────────┐  ┌──────────────────────┐  S304
        │ COHERENT DETECTION│  │ CALCULATE DISPERSION  │
        └──────────────────┘  │ COMPENSATION FACTOR 1 │
                    │          │  UNDER CONDITION THAT │
                    ▼          │ FREQUENCY DIFFERENCE 1=0│
S303    ┌──────────────────┐  └──────────────────────┘
        │ DIGITAL CONVERSION│            │
        └──────────────────┘            ▼
                    │          ┌──────────────────────┐
                    │          │ GENERATE DISPERSION   │
                    │          │ COMPENSATION FACTOR 2 │
                    │          │   ON THE BASIS OF     │
                    │          │ FREQUENCY DIFFERENCE 2│
                    │          └──────────────────────┘ S307
                    ▼
S305    ┌──────────────────┐
        │WAVELENGTH DISPERSION│
        │   COMPENSATION    │
        └──────────────────┘
                    │              │          S306
                    ▼              ▼
S308    ┌──────────────────┐  ┌──────────────────┐
        │  OUTPUT RECEIVED │  │ DETECT FREQUENCY │
        │      SIGNAL      │  │   DIFFERENCE 2   │
        └──────────────────┘  └──────────────────┘
                    │
                    ▼
               ┌─────────┐
               │   END   │
               └─────────┘
```

EP 2 637 323 A1

FIG. 12

COHERENT LIGHT RECEIVING DEVICE 4

LIGHT TRANS-MITTING UNIT — 110

LIGHT TRANS-MITTING UNIT — 110

POLARI-ZATION MULTI-PLEX-ING DEVICE — 120

OPTICAL FIBER TRANS-MISSION PATH — 130

POLARIZ-ATION MULTI-PLEX RECEIVING COHERENT RECEIVING CIRCUIT — 41

WAVE-LENGTH DISPERSION COMPENS-ATION CIRCUIT — 43

WAVE-LENGTH DISPERSION COMPENS-ATION CIRCUIT

POLARIZ-ATION SEPAR-ATION CIRCUIT — 47

RECEIVED SIGNAL DEMODUL-ATION CIRCUIT — 45

RECEIVED SIGNAL DEMODUL-ATION CIRCUIT — 45

LOCAL LIGHT SOURCE — 42

FACTOR SHIFT CIRCUIT — 46

FREQUENCY DIFFERENCE 2

FREQUENCY DIFFERENCE 2

WAVELENGTH DISPERSION COMPENSATION FACTOR CALCULATION CIRCUIT (BASED ON FREQUENCY DIFFERENCE 1) — 44

FIG. 13

COHERENT LIGHT RECEIVING DEVICE 5

WAVELENGTH DISPERSION COMPENSATION CIRCUIT

RECEIVED SIGNAL DEMODUL-ATION CIRCUIT 55

RECEIVED SIGNAL DEMODUL-ATION CIRCUIT 55

POLARIZ-ATION SEPAR-ATION CIRCUIT 56

FREQUENCY DIFFERENCE 2

FREQUENCY DIFFERENCE 2

FAST FOURIER TRANSFORM CIRCUIT 501

SIGNAL SHIFT CIRCUIT 502

COMP-LEX MULTI-PLIC-ATION CIRCUIT 503

INVERSE FAST FOURIER TRANSFORM CIRCUIT 504

53

DISPERSION COMPENSATION FACTOR

WAVELENGTH DISPERSION COMPENSATION FACTOR CALCULATION CIRCUIT (BASED ON FREQUENCY DIFFERENCE 1) 54

POLARIZ-ATION MULTIPLEX RECEIVING COHERENT RECEIVING CIRCUIT 51

RECEIVED OPTICAL SIGNAL

LOCAL LIGHT SOURCE

LOCAL LIGHT 52

<table>
<tr><td colspan="2" align="center">**INTERNATIONAL SEARCH REPORT**</td><td colspan="2">International application No.<br>PCT/JP2011/005638</td></tr>
<tr><td colspan="4">A.   CLASSIFICATION OF SUBJECT MATTER<br>*H04B10/02*(2006.01)i, *H04B10/04*(2006.01)i, *H04B10/06*(2006.01)i, *H04B10/14*(2006.01)i, *H04B10/18*(2006.01)i, *H04B10/26*(2006.01)i, *H04B10/28*(2006.01)i<br><br>According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>H04B10/02, H04B10/04, H04B10/06, H04B10/14, H04B10/18, H04B10/26, H04B10/28</td></tr>
<tr><td colspan="4">Documentation searched other than minimum documentation to the extent that such documents are included in the fields searched<br>   Jitsuyo Shinan Koho       1922-1996   Jitsuyo Shinan Toroku Koho   1996-2011<br>   Kokai Jitsuyo Shinan Koho   1971-2011   Toroku Jitsuyo Shinan Koho   1994-2011</td></tr>
<tr><td colspan="4">Electronic data base consulted during the international search (name of data base and, where practicable, search terms used)</td></tr>
<tr><td colspan="4">C.   DOCUMENTS CONSIDERED TO BE RELEVANT</td></tr>
<tr><td>Category*</td><td colspan="2">Citation of document, with indication, where appropriate, of the relevant passages</td><td>Relevant to claim No.</td></tr>
<tr><td>P,X</td><td colspan="2">JP 2011-9956 A   (Fujitsu Ltd.),<br>13 January 2011 (13.01.2011),<br>paragraphs [0010] to [0080], [0192] to [0227];<br>fig. 35 to 41<br>& US 2010/0329697 A1    & EP 2273703 A1<br>& CN 101931469 A       & KR 10-2010-0138772 A</td><td>1-9</td></tr>
<tr><td>Y</td><td colspan="2">WO 2009/060526 A1   (Fujitsu Ltd.),<br>14 May 2009 (14.05.2009),<br>paragraphs [0001] to [0037]; fig. 1 to 7<br>& US 2010/0278528 A1</td><td>1-9</td></tr>
<tr><td colspan="4">[X]   Further documents are listed in the continuation of Box C.    [ ]   See patent family annex.</td></tr>
<tr><td colspan="2">*    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed</td><td colspan="2">"T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family</td></tr>
<tr><td colspan="2">Date of the actual completion of the international search<br>   14 December, 2011 (14.12.11)</td><td colspan="2">Date of mailing of the international search report<br>   27 December, 2011 (27.12.11)</td></tr>
<tr><td colspan="2">Name and mailing address of the ISA/<br>   Japanese Patent Office</td><td colspan="2">Authorized officer</td></tr>
<tr><td colspan="2">Facsimile No.</td><td colspan="2">Telephone No.</td></tr>
</table>

Form PCT/ISA/210 (second sheet) (July 2009)

**INTERNATIONAL SEARCH REPORT**

| International application No. |
| --- |
| PCT/JP2011/005638 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2009/104758 A1  (Nippon Telegraph and Telephone Corp.), 27 August 2009 (27.08.2009), paragraphs [0036] to [0057]; fig. 2 & US 2011/0002689 A1    & EP 2247012 A1 & CN 101946438 A | 1-9 |
| A | JP 2008-153863 A  (Fujitsu Ltd.), 03 July 2008 (03.07.2008), paragraphs [0012] to [0083]; fig. 1 to 6 & US 2008/0145066 A1    & EP 1933478 A1 & CN 101207444 A | 1-9 |
| A | JP 2008-205654 A  (Fujitsu Ltd.), 04 September 2008 (04.09.2008), paragraphs [0001] to [0011], [0034] to [0099]; fig. 1 to 9 & US 2008/0198051 A1     & US 2008/0272943 A1 & EP 1959590 A2          & EP 2034637 A1 & CN 101247177 A          & CN 102064888 A | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009060309 A
- JP 2010057016 A
- JP 2010136146 A
- JP 2010245176 A

**Non-patent literature cited in the description**

- **GOVIND P. AGRAWAL.** Nonlinear Fiber Optics. Academic Press, 1995, 63-65